(19) Europäisches Patentamt / European Patent Office / Office européen des brevets

(11) **EP 1 927 444 B1**

(12) **EUROPÄISCHE PATENTSCHRIFT**

(45) Veröffentlichungstag und Bekanntmachung des Hinweises auf die Patenterteilung:
**15.08.2012 Patentblatt 2012/33**

(51) Int Cl.:
*B23D 5/02* (2006.01)     *B23C 5/04* (2006.01)
*B23C 5/20* (2006.01)     *B27M 1/00* (2006.01)
*B27G 13/14* (2006.01)     *B27G 13/02* (2006.01)
*B27G 13/00* (2006.01)

(21) Anmeldenummer: **07405340.6**

(22) Anmeldetag: **30.11.2007**

(54) **Hobelmesser**

Planing knife

Lame de rabot

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.12.2006 CH 19552006**

(43) Veröffentlichungstag der Anmeldung:
**04.06.2008 Patentblatt 2008/23**

(73) Patentinhaber: **Kälin & Co. AG
8404 Winterthur (CH)**

(72) Erfinder: **Kipfer, Hans Ulrich
8730 Uznach (CH)**

(74) Vertreter: **Rüfenacht, Philipp Michael et al
Keller & Partner
Patentanwälte AG Winterthur
Bahnhofplatz 18
Postfach 2005
8401 Winterthur (CH)**

(56) Entgegenhaltungen:
**EP-A1- 1 895 088    CH-A- 160 823
CH-A- 455 249    DE-A1- 3 002 138
DE-A1- 19 717 706    DE-U1- 8 525 705
FR-A- 607 370    FR-A- 2 250 313
GB-A- 119 730    GB-A- 119 730
US-A- 2 828 585    US-A- 3 001 558
US-A- 5 240 050**

**Beschreibung**

**Technisches Gebiet**

Die Erfindung betrifft ein Hobelverfahren gemäss Oberbegriff des Anspruchs 1. Weiter betrifft die Erfindung ein Hobelmesser für einen Werkzeugkopf zur maschinellen Oberflächenbearbeitung von Holz gemäss dem Oberbegriff des Anspruchs 5, insbesondere für einen Werkzeugkopf einer Hobelmaschine, wobei eine Schneidkante des Hobelmessers zwischen einer Schneidenrückseite und einer Schneidenfase ausgebildet ist. Weiter betrifft die Erfindung einen Werkzeugkopf zur maschinellen Oberflächenbearbeitung von Holz, für eine Hobelmaschine mit einem im Wesentlichen zylindrischen Grundkörper, welcher wenigstens zwei, insbesondere weitgehend in axialer Richtung angeordnete, peripher überstehende Hobelmesser aufweist.

Solche gattungsgemässen Hobelverfahren, Hobelmesser und Werkzeugköpfe sind z.B. aus der DE 85 25 705 U1 bekannt. Strukturell ähnliche, aber für andere Zwecke bestimmte Wendemesser sind aus FR 607370 bekannt.

**Stand der Technik**

Beim Hobeln mit rotierendem Werkzeug entsteht auf der Hobelfläche ein Wellenmuster. Der Abstand der Wellenkämme entspricht der Distanz zwischen dem Eintritt und Austritt der einzelnen Hobelmesser in das Werkstück. Dieser Abstand wird als Hobelschlag bezeichnet, mitunter aber auch als Hobelschritt, Messerschritt oder Vorschub pro Schneide.

Der Hobelschlag ist umso besser sicht- bzw. sensorisch spürbar, je länger der Abstand von Hobelkamm zu Hobelkamm ausgebildet ist. Dagegen ist ein Hobelschlag umso glatter und feiner, je kürzer dieser Abstand ausgebildet ist. Ein sehr kurzer Abstand der Kämme des Hobelschlags bedeutet eine hohe Oberflächenqualität, sowohl bezüglich des Aussehens als auch von weiteren Eigenschaften, beispielsweise des Einfärbens oder Lackierens. Die Wahl des Abstands der Kämme und einer Rauhtiefe des Hobelschlags hängt in erster Linie von den Ansprüchen bzw. Erfordernissen an die Oberflächenqualität ab.

Der Abstand des Hobelschlags ist im Wesentlichen von den folgenden Parametern abhängig:

- Vorschubgeschwindigkeit *v,* mit welcher der die Hobelmesser tragende Werkzeugkopf gegenüber dem zu bearbeitenden Werkstück translatorisch bewegt wird;
- Drehzahl *n* des Werkzeugkopfs, mit welcher die Hobelmesser um eine Drehachse des Werkzeugkopfs auf einem Flugkreis bewegt werden;
- Anzahl *z* von Hobelmessern, welche auf dem Werkzeugkopf vorhanden sind.

Die Hobelschlaglänge *b* lässt sich nach folgender Formel (1) berechnen:

$$b = \frac{v \cdot 1000}{n \cdot z} \tag{1}$$

wobei *v* in Metern pro Minute (m/min), *n* in Umdrehungen pro Minute (Upm) und *z als* dimensionslose Zahl eingesetzt wird. Da die Vorschubgeschwindigkeit *v* in Metern angegeben wird und die Hobelschlaglänge *b* in Millimetern gewünscht ist, ergibt sich ein Faktor 1000 im Zähler des Bruchs.

Für die Beurteilung der Oberflächenqualität der Hobelfläche ist jedoch nicht nur der Abstand der Kämme des Hobelschlags massgebend, sondern auch dessen Rauhtiefe. Die Rauhtiefe ist allgemein ein Mass für die Rauhigkeit einer Oberfläche und stellt ein Mass der Tiefe von der höchsten Erhebung bis zum tiefsten Einschnitt innerhalb einer Bezugsstrecke dar. Im vorliegenden Fall beschreibt die Rauhtiefe eine Eindringtiefe der Hobelmesser in das bearbeitete Werkstück. Dabei entspricht die Hobelschlaglänge b der Bezugsstrecke, die Hobelkämme, welche die Hobelschlaglänge b begrenzen, stellen die höchsten Erhebungen dar und der tiefste Einschnitt wird durch den von den Hobelmessern geräumten Bereich zwischen zwei benachbarten Hobelkämmen gebildet. Je geringer die Rauhtiefe ist, desto besser wird die Qualität der Hobelfläche. Die Rauhtiefe ist abhängig von der Hobelschlaglänge b und dem Flugkreisdurchmesser D der Hobelmesser des rotierenden Werkzeugkopfs. Der Flugkreisdurchmesser D wird von der Schnittkante des äussersten Hobelmessers bestimmt, wobei im Idealfall alle Hobelmesser des Werkzeugkopfs denselben Flugkreis beschreiben (siehe weiter unten).

Eine Rauhtiefe t eines rotierenden Werkzeugkopfs einer Hobelmaschine lässt sich nach folgender vereinfachten Formel (2) berechnen:

$$t = \frac{b^2}{4D} \qquad\qquad (2)$$

Alle Dimensionen der Formel (2) werden in derselben Einheit eingesetzt, zweckmässig in Millimetern.

Üblicherweise wird ein Hobelschlag mit einem Abstand der Hobelkämme im Bereich von 1.3 bis 1.7 mm auch bei hohen Ansprüchen als gute Oberflächenqualität bezeichnet. Mit einer noch kürzeren Länge der Hobelschläge kann die Qualität der Oberfläche zwar weiter gesteigert werden, die Standzeit - die Zeitperiode zwischen den Schärfvorgängen für die Hobelmesser - nimmt jedoch zugleich ab. Je nach Anforderungen wird ein Optimum zwischen der Hobelschlaglänge und der Standzeit der Werkzeuge evaluiert.

Die Rauhtiefe liegt in der Praxis im Bereich von Bruchteilen eines Millimeters und ist wie erwähnt von den Clualitätsanforderungen an die Oberflächengüte des bearbeiteten Werkstücks abhängig. Für höchste Anforderungen, beispielsweise für Möbel, kann die Rauhtiefe im Bereich von 0.001 bis 0.005 mm liegen, für mittlere Qualitätsanforderungen, beispielsweise für Bauleisten, bei 0.005 bis 0.02 mm, bei Täferbrettern mit weniger hohen Qualitätsanforderungen beispielsweise bei 0.005 bis 0.03 mm.

In einer Hobelmaschine können ein oder mehrere Werkzeugköpfe eingesetzt werden, die mit einer gleichen oder einer verschiedenen Anzahl $z$ von Hobelmessern bestückt sind. Für die Güte des fertig bearbeiteten Werkstücks ist typischerweise der letzte Werkzeugkopf verantwortlich. Die Vorschubgeschwindigkeit $v$ ist in der Praxis von der Anzahl von Werkzeugköpfen unabhängig, die Drehzahl $n$ der Werkzeugköpfe ist aus antriebstechnischen Gründen zweckmässig für alle dieselbe.

Weiter ist dem Fachmann bekannt, dass bei einem Werkzeugkopf mit mehreren Hobelmessern, also einem mehrschneidigen Werkzeugkopf, alle Hobelmesser exakt den gleichen Flugkreis haben müssen. Andernfalls besteht die Gefahr, dass das resultierende Muster des Hobelschlags einzig nach der von der Drehachse am weitesten entfernten Schnittkante eines einzigen Hobelmessers bestimmt wird. Mit anderen Worten wirkt der Werkzeugkopf wie wenn er nur mit dem äussersten Hobelmesser bestückt wäre. Der Abstand der Hobelkämme des Hobelschlags und die Rauhtiefe werden in diesem Fall grösser als beabsichtigt (für $z$ wäre in Formel (1) in diesem Fall nur 1 einzusetzen), was sich auf die Oberflächenqualität negativ auswirkt.

In der Praxis wird bei herkömmlichen Systemen ein möglichst einheitlicher Flugkreis aller Hobelmesser auf einem Werkzeugkopf dadurch erreicht, dass die Hobelmesser bei Betriebsdrehzahl mit einem Jointstein abgezogen werden. Dadurch wird gleichzeitig die Schneidkante der Hobelmesser geschärft. Beim Abziehen mit dem Jointstein wird die Schneidkante der Hobelmesser jedoch abgefast (so genannte "Jointfase"), wodurch sich nachteilig ein annähernd rechtwinkliger Keilwinkel an der Schneidkante ergibt und damit beim Eingriff des Hobelmessers in das Werkstück kein sauberer Schnitt mehr erfolgt. Insbesondere werden an der Oberfläche der Hobelfläche angeordnete Zellschichten bei einer Bearbeitung mit derartig abgefasten Hobelmessern komprimiert bzw. gequetscht. Bei einer nachträglichen Oberflächenbehandlung mit flüssigen Anstrichstoffen wie z. B. Lacken, Farben oder Grundierungen können die komprimierten Zellschichten an der Holzoberfläche durch Feuchtigkeitsaufnahme aufquellen und so eine Haftung der Oberflächenbehandlung verschlechtern.

Es ist dem Fachmann geläufig, dass maschinelles Hobeln im Gegenlauf- oder Gleichlaufverfahren erfolgen kann, d. h. die Rotation des Werkzeugkopfs und der Vorschub des Werkstücks sind gegen- oder gleichläufig. Die Wahl der Vorschubrichtung erfolgt nach den Qualitätsanforderungen und der Oberflächengüte des Werkstücks. Sofern erforderlich, wird der sich ergebende Hobelschlag üblicherweise in einem zweiten, separaten Arbeitsschritt entfernt, insbesondere in einem Schleifvorgang mit Schleifbändern mit angepasster Körnung. Schleifvorgänge haben aber verschiedene Nachteile hinsichtlich der resultierenden Oberflächenbeschaffenheit. Insbesondere die Schnittigkeit von Schleifbändern ist im Vergleich zu Schnittvorgängen mit Messern schwierig zu kontrollieren.

Aus der DE 85 25 705 U1 (Licentia Patent-Verwaltungs-GmbH) ist ein sägezahnförmiges Wendemesser für einen Handhobel bekannt, sodass zwei einander korrespondierende Bauteile aufgrund der Rillen optimal verleimt und genau gegeneinander positioniert werden können. In der FR 2 250 313 A (Camard Pierre) ist ein Fräsmesser beschrieben, welches zur maschinellen Herstellungen von verzahnenden Oberflächen bestimmt ist.

Aus der DE 197 17 706 A1 (Bosch GmbH Robert) Ist ein Rustikalmesser für einen Handhobel bekannt. Ein weiteres Messer zur Herstellung von Leisten mit ästhetischen Rillen ist in der FR 607 370 A (Carl Wirwahn and Herbert Reppert) beschrieben.

In der älteren, aber nachveröffentlichten europäischen Anmeldung EP 1 895 088 A1, Leitz), welche unter Art. 54(3) EPÜ fällt, ist ein Profilfräser offenbart, welcher in das Hirnholz einer Fensterkantel ein abgestuftes Profil fräst. Um das Einziehen von Feuchtigkeit in die Leim-Ver-bindung zwischen zwei Holzkanteln eines Fenster-rahmens zu verhindern, wird an der Quer-seite der Kantein (d. h. am Hirnholz) eine Riffelung angefräst. Diese auch als Mikro-verzahnung bezeichnete Riffelung wird nur am Hirnholz angefräst und hat eine Tiefe von 0.2 - 1.5 mm, vorzugsweise von 0.4 - 0.8 mm.

## Darstellung der Erfindung

Aufgabe der Erfindung ist es, dem eingangs genannten technischen Gebiet zugehörende Hobelmesser für einen Werkzeugkopf zur maschinellen Oberflächenbearbeitung von Holz zu schaffen, welche ein Verfahren ermöglichen, das verbesserte Kontrolle der Oberflächenbeschaffenheit des Werkstücks erhöht und eine spätere Oberflächenbehandlung begünstigt. Weiter ist es die Aufgabe der Erfindung, einen mit erfindungsgemässen Hobelmessern versehenen Werkzeugkopf zur maschinellen Oberflächenbearbeitung von Holz sowie ein Verfahren zur maschinellen Oberflächenbearbeitung von Holz bereitzustellen.

Die Lösung der Aufgabe hinsichtlich des Verfahrens ergibt sich aus Anspruch 1. Die Lösung der Aufgabe hinsichtlich der Hobelmesser ist durch die Merkmale des Anspruchs 5 definiert.

Gemäss der Erfindung weist ein Hobelmesser für einen Werkzeugkopf zur maschinellen Oberflächenbearbeitung von Holz, insbesondere für den Werkzeugkopf einer Hobelmaschine, eine Schneidkante auf, welche zwischen einer Schneidenrückseite und einer Schneidenfase ausgebildet ist. Das Hobelmesser zeichnet sich dadurch aus, dass wenigstens im Bereich der Schneidkante eine durch Kerben einer Tiefe von 0.05 bis 0.3 mm gebildete Feinstrukturierung in der Form einer Vielzahl von rillenförmigen Aussparungen vorhanden ist, welche sich über wenigstens einen Bereich der Schneidenrückseite oder einen Bereich der Schneidenfase des Hobelmessers erstrecken und derart durch die Schneidkante des Hobelmessers hindurch treten, dass sich an der Schneidkante eine Vielzahl von Kerben ergibt. Die rillenförmigen Aussparungen können sich auch über wenigstens einen Bereich der Schneidenrückseite und einen Bereich der Schneidenfase des Hobelmessers erstrecken.

Die erfindungsgemässen Hobelmesser weisen zur Bildung einer Schneidkante eine angeschrägte Stirnseite auf, eine so genannte Schneidenfase oder Fase. Die Schneidkante ist dabei zwischen einer Schneidenrückseite und der Schneidenfase des Hobelmessers ausgebildet. Die rillenförmigen Aussparungen sind dabei erfindungsgemäss auf einer Schneidenrückseite oder auf der Schneidenfase oder auf der Schneidenrückseite und der Schneidenfase ausgebildet. Konventionsgemäss bezeichnet Schneidenrückseite dabei eine Spanfläche des Hobelmessers. Hier und im Weiteren wird unter maschineller Oberflächenbearbeitung von Holz neben einer Bearbeitung mit einer stationären Hobelmaschine bzw. Hobelanlage verstanden. Im Folgenden wird der Einfachheit halber ohne Einschränkung der Allgemeinheit auf Hobelmaschinen Bezug genommen.

Versuche der Anmelderin haben ergeben, dass die Güte der Haftung von Anstrichstoffen, insbesondere flüssigen Anstrichstoffen, auf bearbeiteten Werkstückflächen weitgehend auf die physische Oberflächenbeschaffenheit zurückzuführen ist und ein Eindringen der Anstrichstoffe in das Material des Werkstücks hierfür kaum relevant ist. Daraus ergibt sich die Erkenntnis, dass die Haftung von Anstrichstoffen mit einer entsprechenden mechanischen Endbearbeitung der Werkstückoberflächen verbessert werden kann.

Endbearbeitungen mit Schleifvorgängen, wie sie oft bei herkömmlichen Verfahren zur Anwendung kommen, weisen aber eine Reihe von Nachteilen auf.

Ein wesentlicher Nachteil von Schleifvorgängen wird beim Schleifen von Holz mit Ästen im Werkstück offenbar. Im Bereich der Äste ist der Faserverlauf des Holzes quer zur Schnitt- bzw. Bearbeitungsfläche angeordnet (Hirnholz). Zudem bestehen Äste gegenüber dem übrigen Holz eines Baumes aus deutlich härterem Spätholz. An diesen somit vergleichsweise harten Stellen ergeben Schleifvorgänge anstatt einer erwünschten Feinstrukturierung der Werkstückoberfläche vielmehr eine Politur der harten Stellen, was sich nachweislich nachteilig auf die Haftung von Anstrichstoffen auswirkt. Auch in den übrigen, weicheren Bereichen lässt ein Schleifvorgang nur eine bedingte Kontrolle der Oberflächenbearbeitung zu. Schleifvorgänge umfassen eine Vielzahl von stochastisch verteilten Mikro-Schneidprozessen und gehören somit zu Zerspanungvorgängen mit geometrisch unbestimmten Schneiden. Es ist somit grundsätzlicher Natur, dass mit Schleifvorgängen eine exakte Kontrolle kaum erreicht werden kann.

Im Weiteren beträgt eine Standzeit von üblichen Schleifbändern nur wenige Stunden bis 1 Tag. Die Schleifbänder müssen also ein- oder mehrmals am Tag, und damit deutlich häufiger als Hobelmesser, ersetzt werden. Insbesondere bei den vergleichsweise hohen Preisen von Schleifbändern sind Schleifvorgänge somit auch unwirtschaftlich.

Um eine Feinstrukturierung der bearbeiteten Werkstückoberfläche zu erreichen, beschreitet die Erfindung daher einen neuen Weg. Die erfindungsgemässen Hobelmesser ermöglichen aufgrund der Kerbung der Schneidkanten im selben Arbeitsgang neben dem herkömmlichen Hobeln zum einen ein gleichzeitiges zusätzliches teilweises Abtragen der wellenförmigen Struktur der Hobelfläche, d. h. ein teilweises Abtragen der Hobelschläge und damit ein Ebnen der Hobelfläche. Zum anderen erfolgt aufgrund der Kerbung der Schneidkanten im selben Arbeitsgang eine Feinstrukturierung der Hobelfläche, welche einen nachträglichen Schleifvorgang obsolet macht und die für eine spätere Oberflächenbehandlung wirksame Oberfläche der Hobelfläche vergrössert. Die Unregelmässigkeit der Hobelkämme, welche sich durch die gekerbten Hobelmesser ergibt, führt aber auch zu einer homogeneren Oberflächenbeschaffenheit der Hobelfläche, welche auf die Sinnesorgane vergleichsweise glatt und fein bzw. sogar glatter und feiner wirkt, wie eine konventionell gehobelte und anschliessend fein geschliffene Oberfläche. Insbesondere ergibt sich somit gemäss der Erfindung gleichzeitig eine feinstrukturierte Werkstückoberfläche, welche bei einer gewünschten Glattheit eine grösstmögliche Oberfläche zur verbesserten Haftung bzw. Verankerung von Anstrichstoffen erlaubt. Ein "Feinstrukturierendes Hobeln", wie es durch die erfindungsgemässen Hobelmesser ermöglicht wird, bietet damit zum einen deutliche wirtschaftliche Vorteile gegenüber herkömmlichen Verfahren. Zum anderen ist ein Schneidvorgang, wie er mit Hobelmessern durchführbar ist, ein Zerspanungsvorgang mit definierter geometrischer Schneide und damit deutlich besser zu kontrollieren und zu dosieren (z. B. Eingrifftiefe), als ein Schleifvorgang mit undefinierter geometrischer Schneide.

Die eingangs erwähnten Erkenntnisse hinsichtlich der Haftung von Anstrichstoffen zur beispielsweise farblichen Gestaltung von Holzoberflächen gelten aber auch für die Haftung von Leimen zur Verklebung von Holzflächen. Es besteht z.B. im Bau vermehrt das Bedürfnis, Harthölzer wie beispielsweise Eiche oder Buche einzusetzen. Derartige Hölzer zeichnen sich durch eine vergleichsweise grosse Festigkeit aus und eignen sich daher als Baumaterialen, beispielsweise auch für tragende Strukturen (z.B. Binder). Harthölzer lassen sich jedoch nur schlecht oder annähernd gar nicht schleifen. Werden die späteren Klebeflächen aber nur gehobelt, so sind die Flächen für eine Verleimung zu glatt. Eine Oberflächenbearbeitung von Hartholz mit erfindungsgemässen Hobelmesser erzeugt auch in dieser Anwendung eine vorteilhafte Feinsturkurierung der bearbeiteten Oberflächen, d. h. in diesem Fall der Klebeflächen, wodurch eine gute Haftung des Leims ermöglicht wird. Insgesamt wird somit aufgrund der Erfindung eine gute Verklebung von Hartholz ermöglicht, wobei die erfindungsgemässe Feinstrukturierung der gehobelten Oberflächen aber auch die Haftungseigenschaften von Klebstoffen auf weicheren Hölzern vorteilhaft beeinflusst.

Hobeln und die feinstrukturierende Endbearbeitung erfolgt erfindungsgemäss mit einem Werkzeug bzw. in einem Arbeitsschritt, was eine Einsparung an Arbeitszeit und Werkzeugkosten bedeutet. Insbesondere können beispielsweise in Hobelanlagen mit einer Vielzahl von Werkzeugköpfen z. B. Täferbretter (oder andere Formen von Holzbrettern) in einem einzigen Arbeitsschritt auf Endmass gearbeitet werden. Eine Hobelanlage kann hierfür beispielsweise 4 Werkzeugköpfe aufweisen: 2 zur Bearbeitung der Brettflächen und 2 weitere Werkzeugköpfe zur Bearbeitung von Seitenflächen des Bretts. Brettflächen bezeichnen hierbei die flächenmässig grösseren Flächen des Bretts, während die Seitenflächen die weiteren beiden Flächen bezeichnen (auf die Stirnseiten wird hier nicht eingegangen). Üblicherweise werden die Brettflächen mit horizontal liegenden Werkzeugköpfen bearbeitet (Drehachse horizontal), während die Seitenflächen mit vertikal angeordneten Werkzeugköpfen gehobelt werden (vertikale Drehachse). Die Werkzeugköpfe zur Bearbeitung der Seitenflächen weisen beispielsweise erfindungsgemässe Profilhobelmesser auf. Die Profilhobelmesser können an den Seitenflächen des Bretts Stosskanten mit gewünschten Eingriffsprofilen wie Nut und Feder Hobeln bzw. Fräsen und dabei mit einer Feinstruktur versehen. Gleichzeitig können die zwei weiteren Werkzeugköpfe mit geradlinigen erfindungsgemässen Hobelmessern die Brettflächen der späteren Täferbretter gemäss der Erfindung feinstrukturierend Hobeln. Damit ergibt sich in einem einzelnen Arbeitsgang ein Täferbrett mit der gewünschten Oberflächenbeschaffenheit, welches keiner Nachbearbeitung durch beispielsweise einen Schleifvorgang bedarf.

Mit der Bearbeitung in einem Arbeitsgang ist neben der verbesserten Wirtschaftlichkeit auch eine deutlich erhöhte Genauigkeit in der Fertigung der gehobelten Bretter verbunden. Das Brett wird nur einmal ausgerichtet und wird in einem Arbeitsschritt allseitig bearbeitet. Allfällige Ungenauigkeiten, welche sich beispielsweise während des Wendens des Bretts, des Neuausrichtens und des Wiederzuführens zur Hobelmaschine ergeben, können somit verhindert werden.

Weiter kann ein reiner Hobelvorgang mit deutlich höheren (z. B. mehr als doppelt, aber auch vielfach so hohen) Vorschubgeschwindigkeiten erfolgen, als ein Schleifvorgang. Ein Schleifvorgang limitiert eine maximale Vorschubgeschwindigkeit eines Oberflächenbehandlungsprozesses auf ca. 70 m/min. Insbesondere wird aus diesem Grund oft zugunsten eines höheren Durchsatzes auf eine feinstrukturierende Endbearbeitung mit einem Schleifvorgang gänzlich verzichtet. Die erfindungsgemässen Hobelmesser lassen jedoch ein feinstrukturierendes Hobeln mit Vorschubgeschwindigkeiten zu, welche denen beim konventionellen Hobeln entsprechen. Damit erlauben die erfindungsgemässen Hobelmesser ein feinstrukturierendes Hobeln mit mindestens gleich guten Resultaten hinsichtlich der angestrebten Oberflächenbeschaffenheit, wie bei konventionellem Hobeln mit anschliessendem Schleifen, bei Vorschubgeschwindigkeiten, wie sie sonst nur das konventionelle Hobeln alleine erlaubt.

Als weiterer Vorteil wird durch die rillenförmigen Aussparungen bzw. durch die damit erzeugten Kerben der Schneidkante eine vorteilhaftere Spanbildung ermöglicht. Die erfindungsgemässe Kerbung beeinträchtigt zudem die Standzeit der Hobelmesser nicht und ergibt mindestens gleichwertige Standzeiten wie bei herkömmlichen Hobelmessern mit glatten Schneidkanten.

Die Hobelmesser gemäss der Erfindung können beispielsweise in bekannter Weise als Schneidplatten ausgebildet sein, welche auswechselbar an einen Werkzeugkopf anbringbar sind. Derartige Ausführungen als Schneidplatten umfassen beispielsweise Wechselplatten bzw. Wechselschneidplatten, Wendeschneidplatten, Blanketts oder Wechselmesser. Mögliche Ausführungen der Hobelmesser weisen beispielsweise eine Schneidkante auf, welche bei Anordnung der Hobelmesser an einem Werkzeugkopf eine durchgehende Schneide über die gesamte axiale Länge des Werkzeugkopfes ergeben. Erfindungsgemässe Hobelmesser können aber auch als kleine Wechselplättchen mit jeweils einer vergleichsweise kurzen Schneidkante ausgebildet sein, welche in weitgehend axialer Richtung eines Werkzeugkopfes nebeneinander angeordnet sind. Die derart nebeneinander angeordneten Schneidkanten der einzelnen Plättchen ergeben in diesem Fall in Kombination eine Schneide über die Länge des Werkzeugkopfs.

Erfindungsgemäss brauchen Hobelmesser aber nicht auswechselbar zu sein. Die erfindungsgemässe Lösung umfasst auch einstückig an einen Werkzeugkopf-Grundkörper angeformte bzw. unlösbar mit diesem verbundene Hobelmesser (beispielsweise auch mit dem Werkzeugkopf verschweisste oder verlötete Hobelmesser).

Mit Vorteil sind die Aussparungen auf einer Schneidenrückseite am Hobelmesser ausgebildet, da sich das Hobelmesser somit einfach nachschleifen lässt. Zum Schärfen wird einfach die Schneidenfase abgezogen und aufgrund der sich auf der Schneidenrückseite erstreckenden Aussparungen ergibt sich somit auf einfache eine erneuerte und geschärfte Schneidkante mit erfindungsgemässen Kerben. Ausführungen mit Aussparungen auf der Fase sind für gewisse Anforderungen ebenfalls vorteilhaft, da sich beispielsweise aufgrund des Hindurchtretens der Aussparungen an der Schneidkante eine andere Schneidengeometrie bzw. Kerbung ergibt. Damit steht ein breites Spektrum an möglichen Feinstrukturierungen zur Verfügung, welche somit an die jeweiligen Erfordernisse angepasst werden können.

In einer bevorzugten Ausführungsform sind die Aussparungen derart ausgebildet, dass die einzelnen sich ergebenden Kerben der Schneidkante einander weitgehend entsprechende Tiefen aufweisen. Insbesondere entsprechen sich die Tiefen der Kerben dabei in einer Projektion auf eine zur Schneidenrückseite parallele Ebene. Es sind auch Ausführungen denkbar, bei welchen benachbarte Kerben unterschiedliche Tiefen aufweisen, beispielsweise alternierend zwei verschiedene Tiefen haben. Derartige Ausführungen können je nach Erfordernis vorteilhaft sein, um zum Beispiel eine möglicherweise gewünschte zusätzliche Unregelmässigkeit der Hobelfläche zu erzeugen. Im Allgemeinen dürfte aber aufgrund einer einfacheren bzw. vereinheitlichten Herstellung eine Ausführung mit weitgehend identischen Tiefen der Kerben zu bevorzugen sein.

Vorteilhaft ist auch eine Ausführung der Hobelmesser mit Breiten der einzelnen Kerben, welche weitgehend identisch sind. Insbesondere ist hierbei mit Breite eine Breite der Projektionen der Kerben auf eine zur Schneidenrückseite parallele Ebene bezeichnet. Während eine Ausführung mit Kerben konstanter Breite bei Hobelmessern mit geradlinigen Schneidkanten vergleichsweise einfach zu verwirklichen ist (z. B. parallele Aussparungen quer zur Schneidkante), verlangt eine entsprechende Ausführung bei Profilmessern speziellere Muster bzw. Anordnungen der Aussparungen. Mit Vorteil sind dabei auch bei Profilmessern die einzelnen Kerben mit möglichst gleicher Breite, insbesondere auch gleicher Tiefe auszubilden, um auch in diesem Fall die erfindungsgemässen Hobelmesser zu optimieren. Hierzu können die Breiten auch den Tiefen der jeweiligen Kerben entsprechen. Es liegt hierbei im Bereich des Fachmännischen, eine Kombination von Möglichkeiten wie beispielsweise variable Ausrichtungen und/oder variable Querschnitte der Aussparungen zu wählen, sodass sich die resultierenden Kerbenquerschnitte an der Schneidkante weitgehend entsprechen.

Die Kerben der Schneidkante der Hobelmesser haben zweckmässig eine Tiefe, die etwa einer typischen Höhe der teilweise zu beseitigenden Hobelkämme des Hobelschlags entspricht. In der Regel sind dies etwa 0.05 bis 0.3 mm und entsprechen weitgehend einer beim Hobeln entstehenden Rauhtiefe.

Die Feinstrukturierung an der Schneidkante d. h. die Aussparungen im Bereich der Schneidkante der Hobelmesser haben vorzugsweise einen regelmässigen geometrischen Querschnitt. Bevorzugt sind die Aussparungen derart am Hobelmesser ausgeführt, dass auch die Kerben an der Schneidkante einen regelmässigen Querschnitt aufweisen. Insbesondere können die Aussparungen bzw. Kerben halbkreisförmig, kreissegmentförmig, halbelliptisch, dreieckig, quadratisch, rechteckig oder trapezförmig sein. Zwischen den Aussparungen kann ein Kamm ausgebildet sein. Dieser kann bei sich nach aussen erweiternden Aussparungen eine minimale Breite haben und eine abgerundete oder angefaste Kante bilden, und/oder bis etwa so breit wie die Aussparung selbst sein. Derartige Kämme ergeben auch entsprechende Werkzeugkämme zwischen den Kerben an der Schneidkante, welche entsprechend abgerundet oder angefast sein können.

Die einzelnen Aussparungen haben mit Vorteil einen regelmässigen Abstand voneinander, was wie oben bereits erwähnt bei geradlinigen Schneidkanten der Hobelmesser besonders vorteilhaft ist und auch einen regelmässigen Abstand der sich ergebenden Kerben bedingt. Bei Profilmessern sind hingegen auch Ausführungen zweckmässig, bei welchen die Abstände der einzelnen Rillen derart angepasst werden, dass die sich ergebenden Kerbungen der Schneidkante möglichst regelmässig aufeinander folgen. D. h. in diesem Fall wird der Abstand gemäss dem Profilverlauf der Schneidkante derart angepasst, dass die resultierenden Kerben in einem möglichst regelmässigen Abstand angeordnet sind. Die einzelnen Rillen der Aussparungen können dabei derart ausgebildet und/oder angeordnet sein, dass auch die Querschnitte der Kerben einander weitgehend entsprechen. Hierbei ist aber festzuhalten, dass insbesondere bei beispielsweise komplizierten Profilen der Schneidkanten die Querschnitte sowie auch die Abstände der Kerben durchaus variieren können, ohne den erfindungsgemässen Grundgedanken zu verlassen.

Die aus der Schneidenrückseite bzw. der Schneidenfase beispielsweise durch Funkenerosion abgetragenen Aussparungen erstrecken sich wenigstens über einen gewissen Bereich um die Schneidkante, vorzugsweise jedoch über die ganze entsprechende Fläche. Diese Aussparungen können einen rechten Winkel zur Schneidkante haben oder aber auch schräg zur Schneidkante stehen. Insbesondere können die verschiedenen Rillen der Aussparungen unter unterschiedlichen Winkeln auf die Schneidkante treffen, was bei Profilmessern besonders vorteilhaft ist, da somit die aufgrund der gekrümmten Schneidkanten unterschiedlichen Querschnitte der Kerben der Schneidkante ausgeglichen werden können. Bei Hobelmessern mit geradliniger Schneidkante verlaufen die Rillen der Aussparungen bevorzugt parallel und im Wesentlichen quer zur Schneidkante.

Für die Holzbearbeitung werden Hobelmesser aus Stahl, insbesondere aus rostfreiem gehärtetem Werkzeugstahl eingesetzt. Die Hobelmesser des Werkstücks können aber auch andere, mechanisch hinreichend feste und verschleissbeständige Werkstoffe umfassen, welche präzise und wirtschaftlich bearbeitet werden können. Insbesondere sind hierbei beispielsweise auch Cermet oder Keramiken sowie Hartmetalle denkbar. Um Schneideigenschaften und/oder eine Standzeit der Hobelmesser weiter zu verbessern können die Hobelmesser auch mit Hartstoffbeschichtungen wie beispielsweise mono- oder polykristallinem Diamant oder anderen bekannten Hartstoffbeschichtungen versehen sein. Dem Fachmann ist hierbei unmittelbar eine Vielzahl von Massnahmen geläufig, welche eine Verbesserung eines Schneidverhaltens bzw. eines Verschleisses von Schneiden bei der spanabhebenden Materialbearbeitung, wie z. B. dem Hobeln mit Hobelmessern, ergeben.

Besonders einfach umzusetzen ist eine Ausführung der Hobelmesser mit weitgehend parallel angeordneten Aussparungen. Während dies bei Hobelmessern mit geradliniger Schneidkante zweckmässig die bevorzugte Ausführungsform darstellt, sind bei Profilmessern möglicherweise krummlinige und/oder nicht parallele geradlinige Aussparungen erforderlich, um eine gewünschte den Anforderungen gerecht werdende Kerbung an den gekrümmten Schneidkanten zu erzeugen.

Besonders vorteilhaft sind Ausführungen des Hobelmessers, bei welchen die Aussparungen beim Durchtritt senkrecht auf die Schneidkante treffen, da in diesem Fall die Querschnitte der Kerben einfach zu kontrollieren sind und beispielsweise beim Nachschleifen weitgehend unverändert bleiben. Bei Profilmessern mit gekrümmten Schneidkanten sind für diese Ausführungsform krummlinige Aussparungen, welche jeweils senkrecht zur Schneidkante stehen, besonders vorteilhaft. Die rillenförmigen Aussparungen können aber auch im Falle gekrümmter Schneidkanten bei Profilmessern, wenigstens in einem Bereich an der Schneidkante, geradlinig und/oder jeweils senkrecht zur Schneidkante ausgebildet sein, wobei die einzelnen Rillen der Aussparungen in diesem Fall aber nicht mehr parallel angeordnet sind.

Erfindungsgemäss können zur vereinfachten Ausführbarkeit die rillenförmigen beispielsweise auch schräg zu einer Schneidkante der Hobelmesser angeordnet sein.

Insbesondere können die Aussparungen einander auch kreuzen und beispielsweise regelmässige oder unregelmässige Gittermuster erzeugen. In diesem Fall sind beispielsweise eine Wirtschaftlichkeit in der Herstellung und eine gewünschte Kerbung gegeneinander aufzuwiegen, um eine optimale Lösung für ein gegebenes Hobelmesser zu evaluieren.

Bezüglich des Werkzeugkopfs wird die Aufgabe erfindungsgemäss dadurch gelöst, dass ein Werkzeugkopf zur maschinellen Oberflächenbearbeitung von Holz, insbesondere für Spindel einer Hobelmaschine, vorgesehen ist, wobei der Werkzeugkopf einen im Wesentlichen zylindrischen Grundkörper aufweist, welcher wenigstens zwei peripher überstehende Hobelmesser aufweist. Insbesondere sind die Hobelmesser dabei in weitgehend axialer Richtung angeordnet, d. h. die Schneidkanten der Hobelmesser liegen weitgehend parallel zu einer Rotationsachse des Werkzeugkopfs. Die Schneidkanten der Hobelmesser können aber auch derart ausgebildet bzw. angeordnet sein, dass sich beispielsweise eine bezüglich der Rotationsachse schraubenlinienförmige Schneide des Werkzeugkopfs ergibt. Der mit Hobelmessern bestückte Werkzeugkopf zeichnet sich dadurch aus, dass die Hobelmesser wenigstens im Bereich der Schneidkante eine Feinstrukturierung in der Form einer Vielzahl von rillenförmigen Aussparungen aufweisen, welche sich über wenigstens einen Bereich der Schneidenrückseite oder einen Bereich der Schneidenfase oder über wenigstens einen Bereich der Schneidenrückseite und einen Bereich der Schneidenfase der Hobelmesser erstrecken und derart durch die Schneidkanten der Hobelmesser hindurch treten, dass sich an den Schneidkanten jeweils eine Vielzahl von Kerben ergibt. Insbesondere kommen dabei die erfindungsgemässen Hobelmesser bzw. Abwandlungen im Rahmen der Erfindung zum Einsatz, wie sie oben beschrieben sind:

Mit Vorteil sind die Hobelmesser in bekannter Weise als Schneidplatten ausgebildet und am Werkzeugkopf angebracht. Mögliche Verbindungstechniken umfassen ohne Einschränkung beispielsweise Verschraubung und/oder Einspannen oder Klemmen. Mögliche Ausführungen der Hobelmesser umfassen beispielsweise Wechselplatten bzw. Wechselschneidplatten, Wendeschneidplatten, Blanketts oder Wechselmesser. Erfindungsgemässe Werkzeugköpfe brauchen aber keine auswechselbaren Hobelmesser aufzuweisen. Die erfindungsgemässe Lösung umfasst auch einstückig am Grundkörper des Werkzeugkopfs direkt angeformte bzw. unlösbar mit diesem verbundene Hobelmesser (beispielsweise mit dem Werkzeugkörper verschweisst oder verlötete Hobelmesser).

Weist ein Werkzeugkopf einen Flugkreis der Hobelmesser mit Flugkreisdurchmesser D auf, so erzeugen die Hobelmesser bei der Werkstückbearbeitung auf einer Hobelfläche eines Werkstücks ein Wellenmuster mit Hobelschlägen einer einstellbaren Breite (b) und einer vom Durchmesser (D) des Flugkreises des Werkzeugkopfs abhängigen Rauhtiefe (t). Erfindungsgemäss entsprechen mit Vorteil die Tiefen und vorzugsweise auch die Breiten der Kerben der Hobelmesser des Werkzeugkopfes höchstens der Rauhtiefe (t). Insbesondere liegen dabei die Tiefen und/oder die Breiten im Bereich der Rautiefe (t). Ein derartiger Werkzeugkopf erlaubt beim teilweisen Abtragen der Hobelkämme eine Feinstrukturierung der Hobelfläche mit einer Tiefe, welche im selben Grössenbereich liegt wie die Rautiefe der Hobelschläge selbst.

Die Erfindung bezieht sich auch auf einen auf einer Spindel einer Hobelmaschine angeordneten, im Wesentlichen zylindrischen Werkzeugkopf mit wenigstens zwei in axialer Richtung eingespannten, peripher überstehenden Hobelmessern, die auf einer Hobelfläche eines Werkstücks ein Wellenmuster mit in einem Abstand angeordneten Hobelschlägen einer einstellbaren Breite und einer vom Durchmesser des Flugkreises des rotierenden Werkzeugkopfs

**EP 1 927 444 B1**

abhängigen Rauhtiefe erzeugen. Insbesondere entspricht der Werkzeugkopf dabei dem oben beschriebenen erfindungsgemässen Werkzeugkopf.

Dabei sind im Bereich der Schneidkanten feinstrukturierte, sich parallel regelmässig quer über wenigstens einen Teil der Breite der Schrägfläche und/oder der Länge der Messerrückseite des Hobelmessers erstreckende Aussparungen höchstens einer der Rauhtiefe des Werkstücks entsprechenden Tiefe und Breite abgetragen. Insbesondere entsprechen die Hobelmesser speziellen Ausführungsformen der oben beschriebenen erfindungsgemässen Hobelmesser.

Der im Wesentlichen zylinderförmig ausgebildete Werkzeugkopf hat einen Durchmesser von vorzugsweise 15 bis 30 cm, insbesondere 22 bis 25 cm, und ist entlang des Umfangs mit 4 bis 16, zweckmässig mit 8 bis 12, regelmässig entlang des Umfangs angeordneten Hobelmessern bestückt. Als Variante ist aber auch eine ungerade Anzahl von Hobelmessern wie beispielsweise 3 bis 9 Hobelmesser am Werkzeugkopf denkbar.

In einer bevorzugten Ausführungsform weisen azimutaler Richtung benachbart angeordnete Hobelmesser unterschiedliche Querschnitte der Kerben auf. Azimutal ist hierbei als azimutal bezüglich einer Rotationsachse des Werkzeugkopfes zu verstehen. Bei unterschiedlichen Kerbenquerschnitten benachbarter Hobelmesser wird verhindert, dass sich aufgrund miteinander fluchtender Kerben und Kämme der Hobelmesser eine möglicherweise unerwünschte Regelmässigkeit im Hobelmuster ergibt. Aus wirtschaftlichen Gründen kann es aber durchaus auch vorteilhaft sein, nur Hobelmesser derselben Bauart, d. h. in diesem Fall mit identischen Kerbenquerschnitten, am Werkzeugkopf vorzusehen.

Zudem können einzelne Hobelmesser mit in einem regelmässigen Muster gekerbten Schneidkanten im Falle geradliniger Schneidkanten um einen Bruchteil der Breite einer Aussparung in Axialrichtung des Werkzeugkopfs gegeneinander versetzt sein. Das Versetzen der Hobelmesser in Axialrichtung kann paarweise oder über mehr als drei Hobelmesser alternierend ausgebildet sein. Derart können die Hobelkämme des Hobelschlags weniger regelmässig abgetragen werden und sich einer Feinschleiftextur annähern. Ein gleicher oder ähnlicher Effekt wird erreicht, wenn die einzelnen Hobelmesser eines Werkzeugkopfs einzeln oder gruppenweise unterschiedliche Aussparungen der Schneidkante und/oder wie oben beschrieben benachbarte Hobelmesser unterschiedliche Querschnitte der Kerben aufweisen. Dies ist insbesondere bei Profilmessern vorteilhaft, welche nicht axial gegeneinander verschoben am Werkzeugkopf angebracht werden können. Beispielsweise können 2 verschiedene Typen von Profilmessern mit gleichem Profil aber unterschiedlichem Aussparungsmuster bzw. Kerbungen an der Schneidkante alternierend am Werkzeugkopf angebracht werden und erzeugen damit die verbesserte Feinschlifftextur.

Bezüglich des Verfahrens wird die Aufgabe erfindungsgemäss dadurch gelöst, dass ein Verfahren zur Oberflächenbearbeitung, insbesondere zum Hobeln, von Werkstücken in Form von Holzbrettern oder -profilen, insbesondere von Täfer- und Schalungsbrettern, in einer Maschine zur Oberflächenbearbeitung von Holz, insbesondere einer Hobelmaschine, mit einem Werkzeugkopf mit wenigstens zwei Hobelmessern durchgeführt wird. Das Bilden und teilweise Abtragen von Hobelschlägen erfolgt dabei gleichzeitig mit demselben Werkzeugkopf mit feinstrukturierter Schneidkante der Hobelmesser. Insbesondere werden die Hobelschläge gar nicht erst vollständig, beispielsweise mit scharfen Hobelkämmen, wie bei herkömmlichen Hobelverfahren ausgebildet. Aufgrund der gekerbten Schneidkanten der Hobelmesser werden die Hobelschläge mit einer unregelmässigen Feinstruktur versehen, weshalb sie gesamthaft unregelmässiger und weniger betont ausgebildet sind und sich somit eine homogenere Hobelfläche ergibt. Insbesondere kommen dabei die oben beschriebenen Hobelmesser bzw. erfindungsgemässe Abwandlungen derselben zum Einsatz und vorzugsweise wird ein erfindungsgemässer Werkzeugkopf verwendet. Das erfindungsgemässe Verfahren umfasst somit das eingangs beschriebene feinstrukturierende Hobeln, welches eine gezielte Strukturierung der Hobelfläche und gemäss der beabsichtigten Weiterverwendung des Werkstücks optimierte Werkstückoberfläche ermöglicht, beispielsweise zur verbesserten Aufnahme und Haftung von Anstrichstoffen wie Lacken oder Farben.

Besonders bevorzugt wird das erfindungsgemässe Verfahren zur Oberflächenbearbeitung, insbesondere zum Hobeln, von Werkstücken in Form von Holzbrettern oder -profilen, insbesondere von Täfer- und Schalungsbrettern, in einer Maschine zur Oberflächenbearbeitung von Holz, insbesondere einer Hobelmaschine, mit einem Werkzeugkopf durchgeführt, welcher wenigstens zwei peripher überstehende Hobelmesser aufweist. Dabei kommt insbesondere ein erfindungsgemässer Werkzeugkopf zum Einsatz, wie er oben beschrieben ist, wobei vorzugsweise der Werkzeugkopf mit den beschriebenen erfindungsgemässen Hobelmessern bestückt ist. Die Schneidkanten der Hobelmesser beschreiben bei der Durchführung des Verfahrens einen Flugkreis mit einem Flugkreisdurchmesser D und weisen Kerben mit einer gewissen Kerbtiefe auf. Bei der Durchführung des erfindungsgemässen Verfahrens wird nun in Abhängigkeit der Anzahl der am Werkzeugkopf vorhandenen Hobelmesser eine Vorschubgeschwindigkeit gegenüber dem Werkstück und eine Drehzahl des Werkzeugkopfs derart angepasst, dass sich auf dem bearbeiteten Werkstück eine Rauhtiefe ergibt, welche im Bereich der Tiefe der Kerben der Schneidkanten liegt. Insbesondere ist die Rauhtiefe dabei mit Vorteil geringfügig grösser als die Tiefe der Kerben. Geringfügig grösser bezeichnet hierbei eine Rauhtiefe, welche vorzugsweise kleiner als eine doppelte Kerbtiefe der Kerben der Schneidkante ist. Damit wird bei der Durchführung des erfindungsgemässen Verfahrens beim teilweisen Abtragen der Hobelkämme eine Feinstrukturierung der Hobelfläche mit einer Tiefe erreicht, welche im selben Grössenbereich liegt wie die Rauhtiefe der Hobelschläge selbst. Somit wird gesamthaft eine weitgehend einheitliche feinstrukturierte Oberfläche des Werkstücks geschaffen.

8

Die auf der Hobelfläche eines Werkstücks erzeugten Hobelschläge haben insbesondere für Täfer- und Schalungsbretter, eine Länge von 1 bis 2.5 mm, insbesondere 1.3 bis 1.7 mm, und eine Rauhtiefe von 0.05 bis 0.3 mm. Die Hobelkämme werden jedoch im Gegensatz zum Stand der Technik gar nicht erst als eine durchgehende Kante ausgebildet. Sie werden im gleichen Arbeitsgang aufgrund der gekerbten Schneidkanten gleichzeitig unregelmässig strukturiert. Es hat sich herausgestellt, dass die angegebenen Werte besonders für eine nachträgliche Oberflächenbehandlung mit flüssigen Anstrichstoffen wie beispielsweise eine Lackierung bzw. Färbung des gehobelten Werkstücks geeignet sind. Es ist aber durchaus denkbar, dass andere Werte, welche ausserhalb des angegebenen Bereichs liegen, je nach Material und Erfordernis bevorzugte Ergebnisse ergeben.

Bei der Herstellung von Täfer- und Schalungsbrettern, welche in der Regel aus Nadelhölzern bestehen, ist konventionell aufgrund einer Endbearbeitung durch einen Schleifvorgang eine Vorschubgeschwindigkeit von 45 bis 50 m/min bis maximal 70 m/min üblich. Ein Schleifvorgang lässt bei der Endbearbeitung keine höheren Vorschubgeschwindigkeiten zu. Da erfindungsgemäss die Endbearbeitung ebenfalls durch einen Schneidvorgang bzw. in einem Arbeitsschritt mit dem Hobelvorgang erfolgt, können hingegen selbst bei der Endbearbeitung Vorschubgeschwindigkeiten erreicht werden, wie sie sonst nur beim reinen Hobeln üblich sind. Insbesondere betragen anwendbare Vorschubgeschwindigkeiten beispielsweise 150 m/min oder höher. In gleicher Technologie werden Hölzer z.B. mit Geschwindigkeiten bis zu 1050 m/min gehobelt (kalibrieren), wobei mit den erfindungsgemässen Hobelmessern eine Umsetzung derart hoher Vorschubgeschwindigkeiten durchaus denkbar ist. Die erfindungsgemäss mögliche Erhöhung der Vorschubgeschwindigkeit bei der Endbearbeitung ist somit eine direkte Folge der fehlenden Notwendigkeit für einen Schleifvorgang.

Aus der nachfolgenden Detailbeschreibung und der Gesamtheit der Patentansprüche ergeben sich weitere vorteilhafte Ausführungsformen und Merkmalskombinationen der Erfindung.

**Kurze Beschreibung der Zeichnungen**

Die zur Erläuterung des Ausführungsbeispiels verwendeten Zeichnungen zeigen schematisch:

Fig. 1a     einen transversalen Querschnitt durch einen Werkzeugkopf einer Hobelmaschine mit Gegenlaufspanung eines Werkstücks;

Fig. 1b     eine Schrägansicht eines Werkzeugkopfs mit angeformten Hobelmessern und Aussparungen auf Rückseiten der Hobelmesser;

Fig. 2a     eine perspektivische Ansicht eines Hobelmessers mit erfindungsgemässen Aussparungen auf einer abgeschrägten Stirnseite (Schneidenfase) des Hobelmessers;

Fig. 2b     eine perspektivische Ansicht eines Hobelmessers mit erfindungsgemässen Aussparungen auf einer Messerrückseite;

Fig. 3a-f     verschiedene Profile der Aussparungen, jeweils in einer Schnittansicht senkrecht zu einer mit den Aussparungen versehenen Fläche eines erfindungsgemässen Hobelmessers;

Fig. 4     eine Schrägansicht einer Schneidkante eines erfindungsgemässen Hobelmessers mit durch die Schneidkante hindurch tretenden Aussparungen;

Fig. 5a     eine Aussenansicht eines erfindungsgemässen Hobelmessers mit einer profilierten Schneidkante mit moderater Profilierung mit schrägen geradlinigen Aussparungen auf der Messerrückseite;

Fig. 5b     eine Aussenansicht eines erfindungsgemässen Hobelmessers mit einer profilierten Schneidkante mit starker Profilierung mit krummlinigen Aussparungen auf der Messerrückseite.

Grundsätzlich sind in den Figuren gleiche Teile mit gleichen Bezugszeichen versehen.

**Wege zur Ausführung der Erfindung**

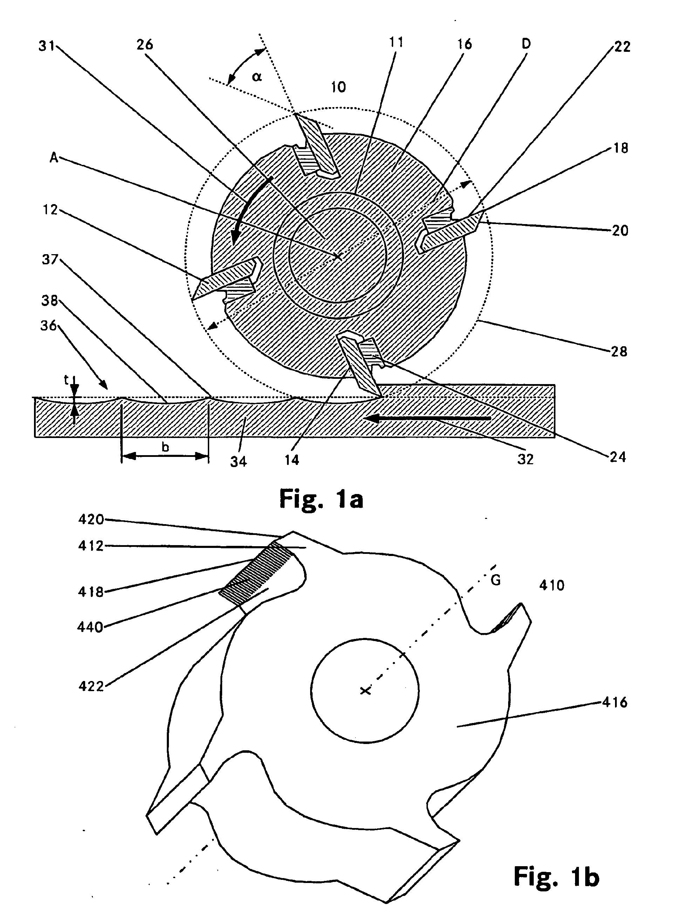

Figur 1a zeigt eine schematische Ansicht eines weitgehend kreiszylindrischen Werkzeugkopfs 10 einer nicht dargestellten Hobelmaschine mit vier Hobelmessern 12. Die vier entlang eines Aussenumfangs gleichmässig verteilten Hobelmesser 12 haben je eine Schneidkante 18, welche im Wesentlichen durch die Schnittlinie einer Schneidenfase 20 mit einer Messerrückseite 22 gebildet ist. Die Hobelmesser 12 sind dabei in mantelseitig offenen Schrägschlitzen 14 gehalten, welche in Längsrichtung A des Werkzeugkopfs 10 an einem kreiszylinderförmigen Grundkörper 16 des Werkzeugkopfs 10 ausgebildet sind. Die Schneidkanten 18 der Hobelmesser sind weitgehend parallel zu der Längsrichtung A des Werkzeugkopfs 10 angeordnet. Die Hobelmesser 12 sind mit Aufpresselementen 24 in den Schrägschlitzen 14 des Werkzeugkörpers 16 eingespannt. Die Schneidenfase 20 und die Messerrückseite 22 bilden einen Keilwinkel $\alpha$ von etwa 45°, wobei je nach Erfordernis auch andere Werte für den Keilwinkel gewählt werden können.

Der Werkzeugkopf 10 weist längs der Zylinderachse A eine zentrale Bohrung 11 auf, über welche er mit einer Spindel 26 einer (nicht dargestellten) Hobelmaschine drehmomentfest verbunden ist. Der Werkzeugkopf 10 ist dabei derart auf der Spindel 26 angeordnet, dass die Schneidkanten 18 aller Hobelmesser 12 auf einem gestrichelt gezeichneten Flugkreis 28 eines Durchmessers D liegen.

Figur 1a zeigt den Werkzeugkopf 10 im Arbeitseinsatz. Er rotiert gemäss dem Pfeil 31 im Gegenuhrzeigersinn. Dabei wird er von der Spindel 26 angetrieben. In Richtung des Pfeils 32 wird ein zu hobelndes Werkstück 34, vorliegend ein Täferbrett, eingeschoben. Die Rotationsrichtung 31 des Werkzeugkopfs 10 und die Vorschubrichtung 32 des Werkstücks 34 sind gegenläufig. Bei jeder Umdrehung des Werkzeugkopfs 10 werden auf der Hobelfläche 36 vier im Querschnitt kreissegmentförmige Hobelschläge 38 einer Länge b mit Hobelkämmen 37 erzeugt. Die Hobelschlaglänge b beträgt vorliegend etwa 1.5 mm, wobei die Hobelschläge 38 eine Rauhtiefe t von etwa 0.1 mm haben. In der Praxis werden die Parameter b und t optimiert, abhängig vom Verwendungszweck, von der Holzart und von der Faserstruktur des Holzes.

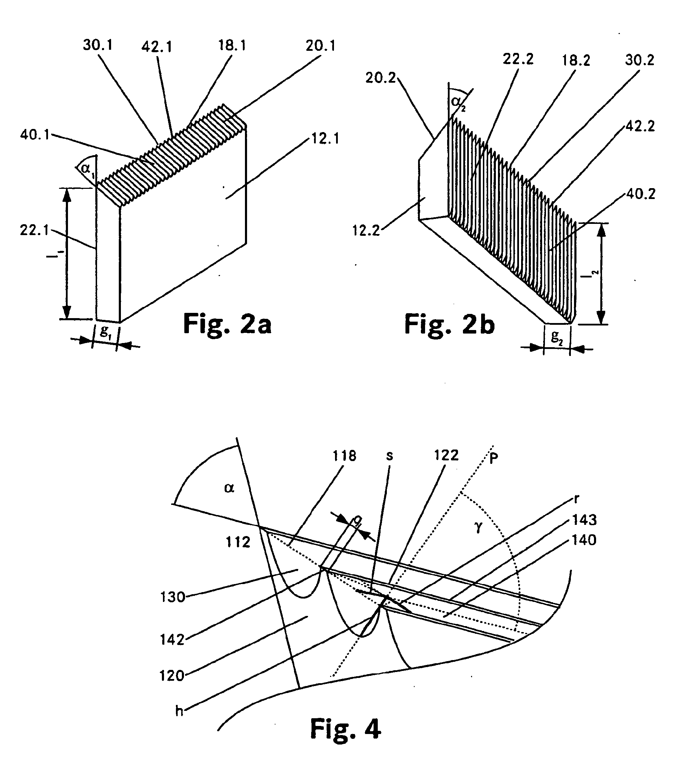

Aufgrund der Schnittansicht der Fig. 1a zwar nicht ersichtlich, weisen die Hobelmesser 12 erfindungsgemäss Schneidkanten 18 mit einer Feinstruktur in der Form einer Vielzahl Kerben 30 auf, welche durch Aussparungen 40 gebildet werden, die auf entweder der Stirnseite 20 oder auf der Messerrückseite 22 ausgebildet sind und die Schneidkante 18 durchstossen (siehe hierzu Fig. 2a und 2b). Durch so erzeugte zwischen den Kerben 30 sich ergebende Werkzeugkämme 42 der Hobelmesser 12 werden die Hobelkämme 37 der Hobelfläche 36 teilweise entfernt bzw. gar nicht erst vollständig ausgebildet. Der besseren Übersichtlichkeit wegen wurde davon abgesehen, die Feinstrukturierung der Hobelfläche 36 in der Fig. 2 einzuzeichnen.

Figur 1b zeigt eine weitere Ausführungsform eines erfindungsgemässen Werkzeugkopfs 410 mit einem kreiszylinderförmigen Grundkörper 416 mit Längsachse G in einer schematischen Schrägansicht. Der Werkzeugkopf 410 weist vier entlang eines Aussenumfangs gleichmässig verteilte Hobelmesser 412 auf, welche jeweils eine Schneidkante 418 haben. Die Schneidkanten 418 werden dabei jeweils im Wesentlichen durch die Schnittlinie einer abgeschrägten Schneidenfase 420 mit einer Messerrückseite 422 gebildet. Die Schneidkanten 418 der Hobelmesser 412 sind dabei in Längsrichtung des Werkzeugkopfs 410 angeordneten. Im Gegensatz zum Werkzeugkopf 10 der Fig. 1a sind die Hobelmesser 412 beim Werkzeugkopf 410 am Grundkörper 416, insbesondere einstückig, angeformt. Wie in der Darstellung der Fig. 1b ersichtlich, weisen die Hobelmesser 412 Aussparungen 440 auf der Messerrückseite 422 auf. Die Aussparungen 440 erstrecken sich dabei quer zu den Schneidkanten 418 auf die jeweils zugehörige Messerrückseite 422 und treten durch die Schneidkanten 418 hindurch, derart, dass die Schneidkanten 418 eine Vielzahl von Kerben aufweisen.

Figuren 2a zeigt eine perspektivische Ansicht eines im Wesentlichen plattenförmigen Hobelmessers 12.1 mit einer abgeschrägten Stirnseite 20.1. Das Hobelmesser 12.1 hat eine Dicke $g_1$, eine Ausdehnung einer Messerrückseite 22.1 in Richtung senkrecht zu einer geradlinigen Schneidkante 18.1 des Hobelmessers 12.1 ist mit $I_1$ bezeichnet. Die Schrägfläche 20.1 weist dabei einen Winkel $\alpha_1$ gegenüber der Messerrückseite 22.1 auf. Eine Schnittgerade der Schrägfläche 20.1 mit der Messerrückseite 22.1 ergibt dabei die Schneidkante 18.1. Die Schrägfläche 20.1 weist dabei parallele Aussparungen 40.1 auf, welche sich senkrecht zur Schneidkante 18.1 auf der Stirnseite 20.1 erstrecken. Die Schneidkante 18.1 ist von den parallelen Aussparungen 40.1 derart durchbrochen, dass sich an der Schneidkante 18.1 ein Werkzeugkamm 42.1 mit einer Vielzahl von dazwischen liegenden Kerben 30.1 ergibt.

In Fig. 2b ist ein weiteres plattenförmiges Hobelmesser 12.2 der Dicke $g_2$ dargestellt, bei welchem aber im Gegensatz zum Hobelmesser 12.1 der Fig. 2a Aussparungen 40.2 auf einer Messerrückseite 22.2 ausgebildet sind. Eine schräge Stirnfläche 20.2 des Hobelmessers 12.2 ist dabei im Wesentlichen glatt ausgebildet. Die parallelen Aussparungen 40.2 erstrecken sich senkrecht zu einer Schneidkante 18.2 über eine Länge $I_2$ der Messerrückseite 22.2. An der die Schneidkante 18.2 bildenden Schnittkante der Messerrückseite 22.2 und der Stirnfläche 20.2 durchstossen die Aussparungen 40.2 die Schneidkante 18.2 und bilden somit eine Vielzahl von Kerben 30.2 längs der Schneidkante 18.2. Ähnlich der Ausführungsform der Fig. 2a ergibt sich somit ein Werkzeugkamm 42.2.

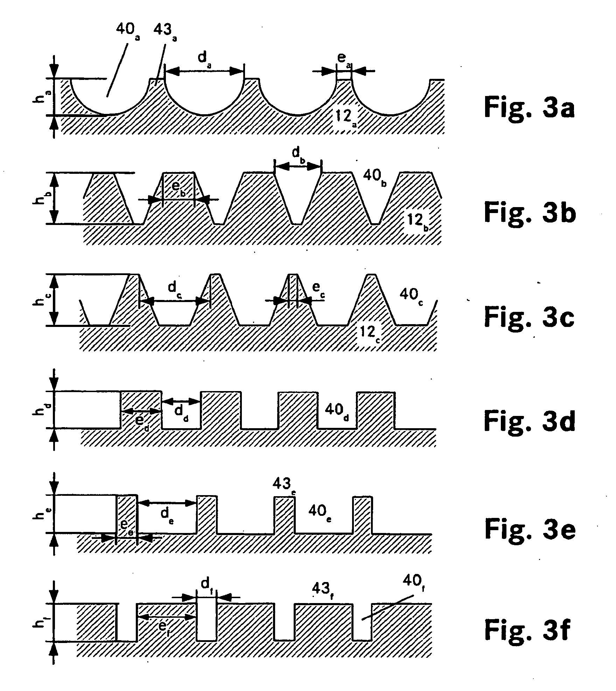

Die Aussparungen 40 entweder der Messerrückseite 22 oder der abgeschrägten Stirnseite bzw. der Schneidenfase 20 eines erfindungsgemässen Hobelmessers 12 ist in den Fig. 3a-f im Querschnitt senkrecht zur jeweiligen Fläche, an welcher die Aussparungen 40 ausgebildet sind, im Detail dargestellt.

Fig. 3a zeigt halbkreisförmig ausgebildete Aussparungen $40_a$ eines Hobelmesser $12_a$ einer Breite $d_a$. Diese haben vorliegend eine Tiefe $h_a$, wobei diese weitgehend einer Rauhtiefe t des gehobelten Werkstücks 34 (Fig. 1a) entspricht. Bei einem Keilwinkel $\alpha$ von etwa 45 Grad der Schneidkante 18 ergibt sich somit eine Kerbtiefe der Kerben 30 an den Scheidkanten 18, welche weitgehend der Tiefe $h_a$ der Aussparungen $40_a$ entspricht. Je nach Keilwinkel können sich aber auch Kerbtiefen ergeben, welche grösser oder kleiner sind, als eine Tiefe $h_a$ der Aussparungen $40_a$. Sich ergebende Kämme $43_a$ zwischen den Aussparungen $40_a$ weisen dabei eine Breite $e_a$ auf.

Die weiteren Fig. 3b bis Fig. 3f zeigen weitere Aussparungsprofile mit anderen Querschnittsprofilen in einer mit der Fig. 3a vergleichbaren Ansicht. Fig. 3b zeigt im Querschnitt dreieckförmige Aussparungen $40_b$ eines Hobelmessers $12_b$, wobei eine Spitze der jeweils dreieckigen Querschnitte in das Hobelmesser $12_b$ hinein ragt. Die Spitze ist dabei angefast bzw. abgerundet. Eine der Spitze gegenüberliegende Basis der dreieckigen Querschnitte liegt in der Fläche, in welcher die Aussparungen $40_b$ ausgebildet sind und weist eine Breite $d_b$ auf, wobei zwei benachbarte Aussparungen einen Abstand $e_b$ aufweisen. Eine Tiefe der Aussparung $40_b$ ist mit $h_b$ bezeichnet.

Fig. 3c zeigt trapezförmige Aussparungen $40_c$ eines Hobelmessers $12_c$, wobei eine breitere Basis eine Breite $d_c$ aufweist und in der Fläche angeordnet ist, in welcher die Aussparungen $40_c$ ausgebildet sind. Eine schmalere, dazu parallele, Seite des Trapez' ragt in das Hobelmesser $12_c$ hinein. Die Aussparungen $40_c$ weisen dabei eine Tiefe $h_c$ auf, wobei zwei benachbarte Aussparungen $40_c$ einen Abstand $e_c$ haben.

Fig. 3d zeigt weitgehend quadratische Aussparungen $40_d$ einer Breite $d_d$ mit einem Abstand $e_d$ benachbarter Aussparungen $40_d$ und einer Tiefe $h_d$. Fig. 3e zeigt rechteckige Aussparungen $40_e$ einer Breite $d_e$ und einer im Vergleich zur Tiefe $h_d$ vergleichsweise kleineren Tiefe $h_e$, wobei aufgrund eines im Vergleich zur Breite $d_e$ deutlich kleineren Abstands $e_e$ der Aussparungen $40_e$ sich schmale Kämme $43_e$ ergeben. Fig. 3f schliesslich zeigt Aussparungen $40_f$ einer Breite $d_f$ und einer Tiefe $h_f$, welche kleiner ist als ein Abstand $e_f$ benachbarter Aussparungen $40_f$ und somit Kämme $43_f$ ergeben, welche breiter sind als die Aussparungen $40_f$.

Figur 4 zeigt eine schematische Ansicht eines Ausschnitts einer Schneidkante 118 eines erfindungsgemässen Hobelmessers 112. Der dargestellte Ausschnitt umfasst im Wesentlichen zwei parallele Aussparungen 140 mit jeweils einem halbkreisförmigen Querschnitt, welche auf einer Messerrückseite 122 ausgebildet sind. Ein Radius r der halbkreisförmigen Aussparungen 140 entspricht somit einer Tiefe h der Aussparungen 140, gemessen von der Messerrückseite 122. Die Aussparungen 140 sind in einem Abstand q voneinander ausgebildet. Die Messerrückseite 122, welche die Oberflächen von zwischen den Aussparungen 140 sich ergebenden Kämmen 143 bildet, schliesst mit einer abgeschrägten Stirnfläche 120 des Hobelmessers 112 einen Winkel $\alpha$ von etwa 45 Grad ein. Der Winkel $\alpha$ kann aber auch je nach Anforderung an das Hobelmesser 112 andere Werte aufweisen.

Die Aussparungen 140 treten an der Schneidkante 118 durch diese hindurch und durchbrechen somit die Stirnseite 120 im Bereich der Schneidkante 118. Die Schneidkante 118 weist somit im Bereich der Aussparungen 140 Kerben 130 auf, zwischen welchen sich Werkzeugkämme 142 ergeben. In einer Projektionsrichtung P senkrecht zur Messerrückseite 122 ($\gamma$ = 90 Grad) weisen die Kerben 130 somit eine Tiefe s auf. Im Falle eines Keilwinkels $\alpha$ von 45 Grad entspricht die Tiefe s dem Radius r der Aussparungen 140, ist der Keilwinkel $\alpha$ kleiner als 45 Grad, so ist die Tiefe s grösser als r und bei einem Keilwinkel $\alpha$ grösser als 45 Grad ist s kleiner als r.

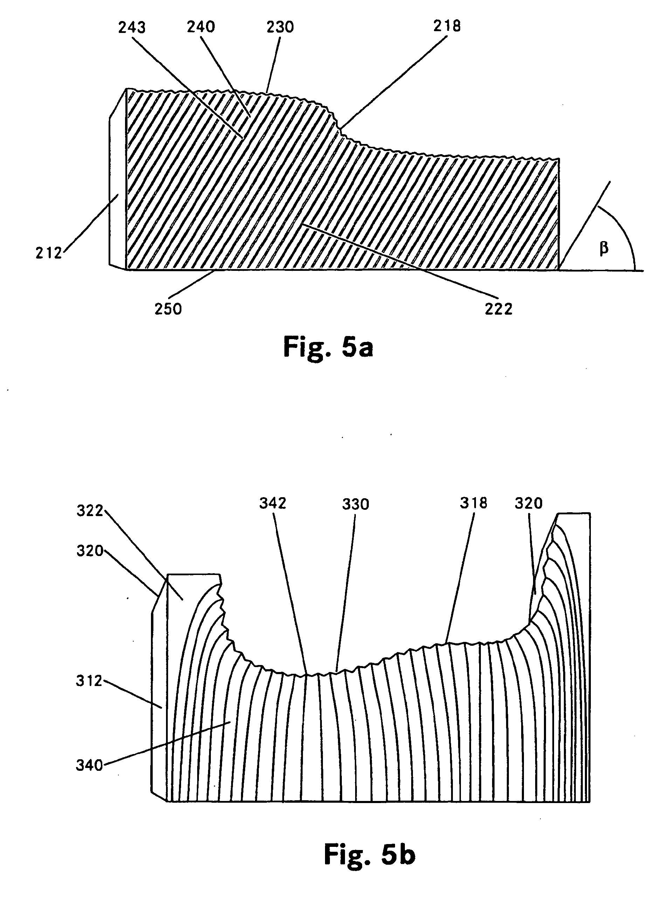

Figur 5 zeigt schematisch ein Profilhobelmesser 212, ein so genanntes Blanket, mit einer moderat gekrümmten Schneidkante 218. Erfindungsgemäss sind auf einer Messerrückseite 222 eine Vielzahl paralleler Aussparungen 240 ausgebildet. Die Aussparungen sind voneinander beabstandet und bilden somit abgeflachte Kämme 243 auf der Messerrückseite 222. Die Aussparungen 240 sind bezüglich einer Grundfläche 250 des Hobelmessers 212 unter einem Winkel $\beta$ ausgerichtet, welcher kleiner als 90 Grad ist. Insbesondere sind die Aussparungen 240 derart ausgerichtet, dass sie an keiner Stelle der Schneidkante 218 tangential zu dieser stehen. Vielmehr schneiden die Aussparungen 240 aufgrund der "schrägen" Ausrichtung die Schneidkante 218 unter einem Winkel, welcher zwar von 90 Grad verschieden ist, aber vorzugsweise grösser als 45 Grad ist. Damit ist sichergestellt, dass sich eine hinreichend feine Kerbung 230 der Schneidkante 218 ergibt, um auch mit einem profilierten Hobelmesser 212 die erfindungsgemässen Vorteile zu erreichen. Die erforderliche Schräge der Aussparungen 240 ist dabei von dem Profil der Schneidkante 218 abhängig bzw. an diese anzupassen. Bei moderaten Profilen kann die dargestellte schräge Ausrichtung der parallelen Aussparungen 240 durchaus hinreichend sein, um zu verhindern, dass eine Kerbbreite zu gross wird bzw. eine Aussparung die Schneidkante 218 tangential berührt und somit keine Kerbe ergibt.

Bei komplizierten bzw. stärkeren Profilen, wie sie beispielsweise das Hobelmesser 312 der Fig. 5b aufweist, kann es erforderlich sein, ein kompliziertes Muster von Aussparungen 340 zu erzeugen, um einerseits eine hinreichende Dichte von Kerben 330 an einer Schneidkante 318 zu erzeugen. Andererseits ist so auch gewährleistet, dass die Kerben 330 hinreichend ähnliche Querschnitte bzw. Breiten und Tiefen aufweisen, um die entstehenden Hobelschläge bzw. Hobelkämme auf einem bearbeiteten Werkstück (siehe Fig. 1) beim erfindungsgemässen Hobelverfahren weitgehend gleichmässig abzutragen. In der Darstellung der Fig. 5b sind die Aussparungen 340 derart krummlinig auf einer Messerrückseite 322 ausgebildet, dass sie die Schneidkante 318 in jedem Punkt im Wesentlichen unter einem rechten Winkel schneiden. Dadurch ergeben sich eine weitgehend konstante Breite der so entstehenden Kerben 330 der Schneidkante 318 und damit auch ein im Wesentlichen konstanter Abstand zwischen benachbarten Werkzeugkämmen 342.

Indem die Aussparungen 340 im Bereich der Schneidkante 318 sich im Wesentlichen quer zur Schneide 318 auf die Messerrückseite 322 erstrecken, wird zudem erreicht, dass das Hobelmesser 312 einfach durch Abziehen einer Stirnseite 320, d. h. einer Schneidenfase 320, des Hobelmessers 312 nachgeschliffen werden kann und dabei die sich an der Schneidkante 318 ergebenden Kerben 330 ihre Form bzw. ihren Querschnitt nur unwesentlich ändern.

Zusammenfassend ist festzustellen, dass die erfindungsgemässen Hobelmesser die Durchführung des erfindungsgemässen feinstrukturierenden Hobelns in einem einzelnen Arbeitsgang erlauben und damit ein wesentlich wirtschaftlicheres Verfahren zur Endbearbeitung einer Holzoberfläche bereitstellen. Zudem ergibt sich dabei eine mindestens gleichwertige Qualität der Hobelfläche, wie bei herkömmlichen Hobelverfahren mit konventionellen Hobelmessern und anschliessendem Schleifen. Eine Oberfläche kann durch den gut kontrollierbaren Schnitt der Hobelmesser gezielt strukturiert und gemäss der beabsichtigten Weiterverwendung des Werkstücks optimiert werden, beispielsweise zur verbesserten Aufnahme und Haftung von Anstrichstoffen wie z. B. Lacken, Lasuren, Farben oder Grundierungen, aber auch von Leimen und Klebstoffen. Darüber hinaus erlaubt die erfindungsgemässe Lösung das gleichzeitige Erzeugen von Hobelschlägen mit stumpfen, d.h. teilweise abgetragenen und nicht scharfkantigen Hobelkämmen, wodurch die Oberflächenstruktur der Hobelfläche feinstrukturiert und damit homogenisiert wird. Die erfindungsgemäss erzeugte Hobelfläche ist somit besonders für eine nachfolgende Oberflächenbeschichtung (beispielsweise Farb- und/oder Leimauftrag) geeignet.

## Patentansprüche

1. Hobelmesser zur Oberflächenbearbeitung von Werkstücken in Form von Holzbrettern oder -profilen, insbesondere von Täfer- und Schalungsbrettern, in einer Hobelmaschine mit einem Werkzeugkopf (10, 410) mit wenigstens zwei Hobelmessern (12, 412), wobei das Bilden und teilweise Abtragen von Hobelschlägen (38) der Hobelschlaglänge (b) gleichzeitig mit demselben Werkzeugkopf (10, 410) mit Hobelmessern erfolgt, bei welchen eine Schneidkante (18, 418) des Hobelmessers (12, 412) zwischen einer Schneidenrückseite (22, 422) und einer Schneidenfase (20, 420) ausgebildet ist, **dadurch gekennzeichnet, dass** das Hobelmesser (12, 412) wenigstens im Bereich der Schneidkante (18, 418) eine durch Kerben (30, 330) einer Tiefe von 0.05 bis 0.3 mm gebildete Feinstrukturierung in der Form einer Vielzahl von rillenförmigen Aussparungen (40, 440) aufweist, wobei sich die Aussparungen über wenigstens einen Bereich der Schneidenrückseite (22, 422) oder der Schneidenfase (20, 420) des Hobelmessers (12, 412) erstrecken und derart durch die Schneidkante (18, 418) des Hobelmessers (12, 412) hindurch treten, dass sich an der Schneidkante (18, 418) eine Vielzahl von Kerben (30, 330) ergibt, um so eine durch Kerben (30, 330) einer Tiefe von 0.05 - 0.3 mm gebildete Feinstrukturierung in der Form einer Vielzahl von rillenförmigen Aussparungen (40, 440) in der Oberfläche des Werkstücks zu erzeugen.

2. Verfahren nach Anspruch 1, zur Oberflächenbearbeitung, insbesondere zum Hobeln, von Werkstücken (34) in Form von Holzbrettem oder -profilen, insbesondere von Täfer- und Schalungsbrettern, in einer Holzbearbeitungsmaschine, insbesondere in einer Hobelmaschine, mit einem Werkzeugkopf (10, 410), insbesondere einem Werkzeugkopf (10, 410) nach einem der Ansprüche 9 bis 14, wobei der Werkzeugkopf (10, 410) wenigstens zwei peripher überstehende Hobelmesser (12, 412) aufweist, insbesondere Hobelmesser (12, 412) nach einem der Ansprüche 1 bis 8, welche einen Flugkreis (28) mit Flugkreisdurchmesser D beschreiben, wobei die Hobelmesser (12, 412) Kerben (30, 330) an den Schneidkanten (18, 418) aufweisen und in Abhängigkeit einer Anzahl (z) der Hobelmessern (12, 412) eine Vorschubgeschwindigkeit (v) des Werkzeugkopfs (10, 410) gegenüber einem Werkstück (34) und eine Drehzahl (n) des Werkzeugkopfs (10, 410) derart bemessen sind, dass sich auf dem Werkstück (34) eine Rauhtiefe (t) ergibt, welche im Bereich der Tiefe (s) der Kerben (30, 330) der Schneidkanten (18, 418) liegt, insbesondere geringfügig grösser ist.

3. Verfahren nach einem der Ansprüche 1 oder 2, **dadurch gekennzeichnet, dass** die Rauhtiefe (t) im Bereich von 0.05 bis 0.3 mm liegt und bevorzugt eine Hobelschlaglänge (b) 1 bis 2.5 mm, insbesondere 1.3 bis 1.7 mm, beträgt.

4. Verfahren nach einem der Ansprüche 1 bis 3, **dadurch gekennzeichnet, dass** bei einer Endbearbeitung der Werkstücke (34) mit einer Vorschubgeschwindigkeit (v) bis 150 m/min gearbeitet wird.

5. Hobelmesser für einen Werkzeugkopf (10, 410) zur Durchführung eines Hobelver fahrens nach Anspruch 1 zur Oberflächenbearbeitung von Werkstücken (34) in Form von Holzbrettem oder -profilen, insbesondere von Täfer- und Schalungsbrettern, wobei eine Schneidkante (18, 418) des Hobelmessers (12, 412) zwischen einer Schneidenrückseite (22, 422) und einer Schneidenfase (20, 420) ausgebildet ist, **dadurch gekennzeichnet, dass** das Hobelmesser (12, 412) wenigstens im Bereich der Schneidkante (18, 418) eine durch Kerben (30, 330) einer Tiefe von 0.05 bis 0.3 mm gebildete Feinstrukturierung in der Form einer Vielzahl von rillenförmigen Aussparungen (40, 440) aufweist, wobei sich die Aussparungen über wenigstens einen Bereich der Schneidenrückseite (22, 422) oder der Schneidenfase (20, 420) des Hobelmessers (12, 412) erstrecken und derart durch die Schneidkante (18, 418) des Hobelmessers (12, 412) hindurch treten, dass sich an der Schneidkante (18, 418) eine Vielzahl von Kerben (30, 330) ergibt.

6. Hobelmesser nach Anspruch 5, **dadurch gekennzeichnet, dass** die Aussparungen (40, 440) derart an dem Hobelmesser (12, 412) ausgebildet sind, dass die einzelnen sich ergebenden Kerben (30, 330) einander entsprechende Tiefen (s) aufweisen.

7. Hobelmesser nach Anspruch 5 oder 6, **dadurch gekennzeichnet, dass** die einzelnen sich ergebenden Kerben (30, 330) einander entsprechende Breiten aufweisen, vorzugsweise sich Tiefen (s) und Breiten der sich ergebenden Kerben (30, 330) einander entsprechen, insbesondere 0.05 bis 0.3 mm betragen und dabei vorzugsweise einen Abstand ($e_a$, $e_b$) des gleichen Dimensionsbereichs aufweisen.

8. Hobelmesser nach einem der Ansprüche 5 bis 7, **dadurch gekennzeichnet, dass** die sich ergebenden Kerben (30, 330) an der Scheidkante (18, 418) in einem regelmässigen Abstand und vorzugsweise mit identischem Querschnitt ausgebildet sind.

9. Hobelmesser nach einem der Ansprüche 8 bis 8, **dadurch gekennzeichnet, dass** die sich ergebenden Kerben (30, 330) an der Schneidkante (18, 418) einen regelmässigen geometrischen Querschnitt haben, vorzugsweise halbkreisförmig, kreissegmentförmig, halbelliptisch, dreieckig, quadratisch, rechteckig oder trapezförmig.

10. Hobelmesser nach einem der Ansprüche 5 bis 9, **dadurch gekennzeichnet, dass** die Aussparungen (40, 440) des vorzugsweise aus Stahl bestehenden Hobelmessers (12, 412) durch Funkenerosion ausgespart sind.

11. Hobelmesser nach einem der Ansprüche 5 bis 10, **dadurch gekennzeichnet, dass** die Aussparungen (40, 440) parallel zueinander angeordnet sind.

12. Hobelmesser nach einem der Ansprüche 5 bis 11, **dadurch gekennzeichnet, dass** die Aussparungen (40, 440) in senkrechter Richtung durch die Schneidkanten (18, 418) hindurch treten.

13. Werkzeugkopf zur Durchführung eines Hobelverfahrens nach Anspruch 1 mit einem Hobelmesser nach Anspruch 5, mit einem im Wesentlichen zylindrischen Grundkörper (16, 416), welcher wenigstens zwei, insbesondere in axialer Richtung angeordnete, peripher überstehende Hobelmesser (12, 412) nach einem der Ansprüche 1 bis 8 aufweist, **dadurch gekennzeichnet, dass** die Hobelmesser (12, 412) wenigstens im Bereich der Schneidkante (18, 418) eine durch Kerben (30, 330) einer Tiefe von 0.05 bis 0.3 mm gebildete Feinstrukturierung in der Form einer Vielzahl von rillenförmigen Aussparungen (40, 440) aufweisen, welche sich über wenigstens einen Bereich der Schneidenrückseite (22, 422) oder einen Bereich der Schneidenfase (20, 420) der Hobelmesser (12, 412) erstrecken und derart durch die Schneidkanten (18, 418) der Hobelmesser (12, 412) hindurch treten, dass sich an den Schneidkanten (18, 418) jeweils eine Vielzahl von Kerben (30, 330) ergeben.

14. Werkzeugkopf nach Anspruch 13, **dadurch gekennzeichnet, dass** die Hobelmesser (12) auswechselbar, vorzugsweise in Form von Wechselplatten bzw. Wechselmessem, am Grundkörper (16) angeordnet sind.

15. Werkzeugkopf nach einem der Ansprüche 13 oder 14, **dadurch gekennzeichnet dass** die Hobelmesser(412), vorzugsweise einstückig, am Grundkörper (416) angeformt sind.

16. Werkzeugkopf nach einem der Ansprüche 13 bis 15, **dadurch gekennzeichnet, dass** der Grundkörper (16, 416) einen Durchmesser von 15 bis 30 cm, vorzugsweise von 20 bis 25 cm, hat und der Grundkörper (16, 416) entlang des Umfangs 4 bis 16, vorzugsweise 8 bis 12, Hobelmesser (12, 412) regelmässig verteilt angeordnet sind.

17. Werkzeugkopf nach einem der Ansprüche 13 bis 16, **dadurch gekennzeichnet, dass** in azimutaler Richtung benachbart angeordnete Hobelmesser (12, 412) unterschiedliche Querschnitte der Kerben (30, 330) aufweisen, vorzugsweise die Kerben (30, 330) benachbart angeordneter Hobelmesser in axialer Richtung gegeneinander versetzt sind.

18. Werkzeugkopf nach einem der Ansprüche 13 bis 17, **dadurch gekennzeichnet, dass** die Hobelmesser (12, 412) auf einer Hobelfläche (36) eines Werkstücks (34) ein Wellenmuster mit Hobelschlägen (38) einer einstellbaren Breite (b) und einer vom Durchmesser (D) des Flugkreises (28) des Werkzeugkopfs (10, 410) abhängigen Rauhtiefe (t) erzeugen, wobei die Tiefen (s) und vorzugsweise die Breiten der Kerben (30, 330) der Hobelmesser (12, 412) höchstens der Rauhtiefe (t) entsprechen.

**Claims**

1.  Planing method for working the surface of workpieces (34) in the form of wooden boards or profiles, in particular of panelling and formwork boards, in a planing machine comprising a tool head (10, 410) with at least two planing knives (12, 412), wherein the formation and partial removal of planing marks (38) of the planing mark length (b) takes place at the same time with the same tool head (10, 410) with planing knives in which a cutting edge (18, 418) of the planing knife (12, 412) is formed between a cutter rear side (22, 422) and a cutter bevel (20, 420), **characterized in that** the planing knife (12, 412) has, at least in the region of the cutting edge (18, 418), a fine structuring in the form of a multiplicity of groove-shaped recesses (40, 440) formed by notches (30, 330) of a depth of 0.05 to 0.3 mm, wherein the recesses extend over at least a region of the cutter rear side (22, 422) or the cutter bevel (20, 420) of the planing knife (12, 412) and pass through the cutting edge (18, 418) of the planing knife (12, 412) in such a way as to obtain a multiplicity of notches (30, 330) on the cutting edge (18, 418), so that a fine structuring in the form of a multiplicity of groove-shaped recesses (40, 440) formed by notches (30, 330) of a depth of 0.05 to 0.3 mm can be achieved in the surface of the workpiece.

2.  Method according to Claim 1, for working the surface of, in particular for planing, workpieces (34) in the form of wooden boards or profiles, in particular of panelling and formwork boards, in a woodworking machine, in particular in a planing machine, comprising a tool head (10, 410), in particular a tool head (10, 410) according to one of Claims 9 to 14, wherein the tool head (10, 410) has at least two peripherally protruding planing knives (12, 412), in particular planing knives (12, 412) according to one of Claims 1 to 8, which describe a cutting circle (28) with a cutting circle diameter D, wherein the planing knives (12, 412) have notches (30, 330) on the cutting edges (18, 418) and, depending on the number (z) of planing knives (12, 412), an advancing rate (v) of the tool head (10, 410) with respect to a workpiece (34) and a rotational speed (n) of the tool head (10, 410) are set so as to obtain on the workpieces (34) a roughness depth (t) that is in the range of the depth (s) of the notches (30, 330) of the cutting edges (18, 418), in in particular is slightly greater,

3.  Method according to either of Claims 1 and 2, **characterized in that** the roughness depth (t) lies in the range of 0.05 to 0.3 mm and preferably amounts to a planing mark length (b) of 1 to 2.5 mm, in particular 1.3 to 1.7 mm.

4.  Method according to one of Claims 1 to 3, **characterized in that**, when finishing the workpieces (34), work is performed with an advancing rate (v) of up to 150 m/min.

5.  Planing knife for a tool head (10, 410) for carrying out a planing method according to Claim 1 for working the surface of workpieces (34) in the form of wooden boards or profiles, in particular of panelling and formwork boards, wherein a cutting edge (18, 418) of the planing knife (12, 412) is formed between a cutter rear side (22, 422) and a cutter bevel (20, 420), **characterized in that** the planing knife (12, 412) has, at least in the region of the cutting edge (18, 418), a fine structuring in the form of a multiplicity of groove-shaped recesses (40, 440) formed by notches (30, 330) of a depth of 0.05 to 0.3 mm, wherein the recesses extend over at least a region of the cutter rear side (22, 422) or the cutter bevel (20, 420) of the planing knife (12, 412) and pass through the cutting edge (18, 418) of the planing knife (12, 412) in such a way as to obtain a multiplicity of notches (30, 330) on the cutting edge (18, 418).

6.  Planing knife according to Claim 5, **characterized in that** the recesses (40, 440) are formed on the planing knife (12, 412) in such a way that the individual notches (30, 330) obtained have depths (s) corresponding to one another.

7.  Planing knife according to Claim 5 or 6, **characterized in that** the individual notches (30, 330) obtained have widths corresponding to one another, preferably depths (s) and widths of the notches (30, 330) obtained correspond to one another, in particular amount to 0.05 to 0.3 mm and at the same time preferably have a spacing ($e_a$, $e_b$) of the same dimensional range.

8.  Planing knife according to one of Claims 5 to 7, **characterized in that** the notches (30, 330) obtained on the cutting edge (18, 418) are formed with a regular spacing and preferably with an identical cross section.

9.  Planing knife according to one of Claims 5 to 8, **characterized in that** the notches (30, 330) obtained on the cutting edge (18, 418) have a regular geometrical cross section, preferably semi-circular, in the form of a segment of a circle, semi-elliptical, triangular, square, rectangular or trapezoidal.

10. Planing knife according to one of Claims 5 to 9, **characterized in that** the recesses (40, 440) of the planing knife (12, 412), preferably consisting of steel, are made by spark erosion.

**EP 1 927 444 B1**

**11.** Planing knife according to one of Claims 5 to 10, **characterized in that** the recesses (40, 440) are arranged parallel to one another.

**12.** Planing knife according to one of Claims 5 to 11, **characterized in that** the recesses (40, 440) pass through the cutting edges (18, 418) in a perpendicular direction.

**13.** Tool head for carrying out a planing method according to Claim 1 with a planing knife according to Claim 5, comprising a substantially cylindrical main body (16, 416), which has at least two peripherally protruding planing knives (12, 412), arranged in particular in the axial direction, according to one of Claims 1 to 8, **characterized in that** the planing knives (12, 412) have, at least in the region of the cutting edge (18, 418), a fine structuring in the form of a multiplicity of groove-shaped recesses (40, 440) formed by notches (30, 330) of a depth of 0.05 to 0.3 mm, which extend over at least a region of the cutter rear side (22, 422) or a region of the cutter bevel (20, 420) of the planing knives (12, 412) and pass through the cutting edges (18, 418) of the planing knives (12, 412) in such a way as to obtain a multiplicity of notches (30, 330) respectively on the cutting edges (18, 418).

**14.** Tool head according to Claim 13, **characterized in that** the planing knives (12) are arranged exchangeably on the main body (16), preferably in the form of indexable inserts or indexable cutters.

**15.** Tool head according to either of Claims 13 and 14, **characterized in that** the planing knives (412) are formed on the main body (416) integrally, preferably in one piece.

**16.** Tool head according to one of Claims 13 to 15, **characterized in that** the main body (16, 416) has a diameter of 15 to 30 cm, preferably of 20 to 25 cm, and 4 to 16, preferably 8 to 12, planing knives (12, 412) are arranged in a regularly distributed manner along the circumference of the main body (16, 416).

**17.** Tool head according to one of Claims 13 to 16, **characterized in that** planing knives (12, 412) arranged adjacently in the azimuthal direction have different cross sections of the notches (30, 330), preferably the notches (30, 330) of adjacently arranged planing knives are offset with respect to one another in the axial direction.

**18.** Tool head according to one of Claims 13 to 17, **characterized in that** the planing knives (12, 412) produce on a planing surface (36) of a workpiece (34) a wave pattern with planing marks (38) of an adjustable width (b) and a roughness depth (t) dependent on the diameter (D) of the cutting circle (28) of the tool head (10, 410), wherein the depths (s) and preferably the widths of the notches (30, 330) of the planing knives (12, 412) correspond at most to the roughness depth (t).

**Revendications**

**1.** Procédé de rabotage pour l'usinage de surface de pièces (34) sous forme de planches de bois ou de profilés en bois, en particulier de planches de revêtement et de coffrage, dans une raboteuse comprenant une tête d'outil (10, 410) avec au moins deux couteaux de rabot (12, 412), la formation et élimination partielle des coups de rabot (38) de la longueur de pas de rabotage (b) ayant lieu simultanément avec la même tête d'outil (10, 410) au moyen de couteaux de rabot, dans lesquels un tranchant d'arête (18, 418) du couteau de rabot (12, 412) est réalisée entre un côté arrière de l'arête (22, 422) et un biseau d'arête (20, 420), **caractérisé en ce que** le couteau de rabot (12, 412), au moins dans la région du tranchant d'arête (18, 418), présente une structuration fine formée par des encoches (30, 330) ayant une profondeur de 0,05 à 0,3 mm sous la forme d'une pluralité d'évidements (40, 440) en forme de rainures, les évidements s'étendant sur au moins une région du côté arrière de l'arête (22, 422) ou du biseau d'arête (20, 420) du couteau de rabot (12, 412), et pénétrant à travers le tranchant d'arête (18, 418) du couteau de rabot (12, 412) de telle sorte qu'une pluralité d'encoches (30, 330) soient formées au niveau du tranchant d'arête (18, 418), de sorte que l'on puisse obtenir une structuration fine formée par des encoches (30, 330) ayant une profondeur de 0,05 à 0,3 mm sous la forme d'une pluralité d'évidements (40, 440) en forme de rainures dans la surface de la pièce,

**2.** Procédé selon la revendication 1, pour l'usinage de surface, en particulier pour le rabotage de pièces (34) sous forme de planches de bois ou de profilés en bois, en particulier de planches de revêtement et de coffrage, dans une machine de traitement du bois, notamment une raboteuse, comprenant une tête d'outil (10, 410), en particulier une tête d'outil (10, 410) selon l'une quelconque des revendications 9 à 14, la tête d'outil (10, 410) présentant au moins deux couteaux de rabot (12, 412) saillant sur la périphérie, notamment des couteaux de rabot selon l'une quelconque des revendications 1 à 8, qui décrivent une trajectoire circulaire (28) de diamètre de trajectoire circulaire D, les couteaux de rabot (12, 412) présentant des encoches (30, 330) sur les tranchants d'arête (18, 418) et en fonction du nombre (z) de couteaux de rabot (12, 412), une vitesse d'avance (v) de la tête d'outil (10, 410) par rapport à une pièce (34) et une vitesse de rotation (n) de la tête d'outil (10, 410) étant ajustées de telle sorte qu'une profondeur d'onde (t) soit obtenue sur la pièce (34), laquelle profondeur est de l'ordre de la profondeur (s) des encoches (30, 330) des tranchants d'arête (18, 418), notamment est légèrement supérieure à celle-ci.

3. Procédé selon l'une quelconque des revendications 1 ou 2, **caractérisé en ce que** la profondeur d'onde (t) est de l'ordre de 0,05 à 0,3 mm et de préférence une longueur de pas de rabotage (b) vaut 1 à 2,5 mm, notamment 1,3 à 1,7 mm.

4. Procédé selon l'une quelconque des revendications 1 à 3, **caractérisé en ce que** pour un usinage final des pièces (34), on travaille à une vitesse d'avance (v) allant jusqu'à 150 m/min.

5. Couteau de rabot pour une tête d'outil (10, 410) pour mettre en oeuvre un procédé de rabotage selon la revendication 1 pour l'usinage de surface de pièces (34) sous forme de planches de bois ou de profilés en bois, en particulier de planches de revêtement et de coffrage, dans lequel un tranchant d'arête (18, 418) du couteau de rabot (12, 412) est réalisée entre un côté arrière de l'arête (22, 422) et un biseau d'arête (20, 420), **caractérisé en ce que** le couteau de rabot (12, 412), au moins dans la région du tranchant d'arête (18, 418), présente une structuration fine formée par des encoches (30, 330) ayant une profondeur de 0,05 à 0,3 mm sous la forme d'une pluralité d'évidements (40, 440) en forme de rainures, les évidements s'étendant sur au moins une région du côté arrière de l'arête (22, 422) ou du biseau d'arête (20, 420) du couteau de rabot (12, 412), et pénétrant à travers le tranchant d'arête (18, 418) du couteau de rabot (12, 412) de telle sorte qu'une pluralité d'encoches (30, 330) soient fermées au niveau du tranchant d'arête (18, 418).

6. Couteau de rabot selon la revendication 5, **caractérisé en ce que** les évidements (40, 440) sont réalisés sur le couteau de rabot (12, 412) de telle sorte que les encoches individuelles résultantes (30, 330) présentent des profondeurs (s) correspondantes.

7. Couteau de rabot selon la revendication 5 ou 6, **caractérisé en ce que** les encoches individuelles résultantes (30, 330) présentent des largeurs correspondantes, de préférence **en ce que** les profondeurs (s) et les largeurs des encoches individuelles résultantes (30, 330) se correspondent, en particulier valent 0,05 à 0,3 mm et présentent en l'occurrence de préférence une distance ($e_a$, $e_b$) de même plage dimensionnelle.

8. Couteau de rabot selon l'une quelconque des revendications 5 à 7, **caractérisé en ce que** les encoches individuelles résultantes (30, 330) sont réalisées sur le tranchant d'arête (18, 418) à intervalles réguliers et de préférence avec la même section transversale.

9. Couteau de rabot selon l'une quelconque des revendications 5 à 8, **caractérisé en ce que** les encoches individuelles résultantes (30, 330) sur le tranchant d'arête (18, 418) ont une section transversale géométrique régulière, de préférence en forme semi-circulaire, en forme de segment de cercle, semi-elliptique, triangulaire, carrée, rectangulaire ou trapézoïdale.

10. Couteau de rabot selon l'une quelconque des revendications 5 à 9, **caractérisé en ce que** les évidements (40, 440) du couteau de rabot (12, 412) constitué de préférence d'acier sont évidés par électro-érosion.

11. Couteau de rabot selon l'une quelconque des revendications 5 à 10, **caractérisé en ce que** les évidements (40, 440) sont disposés parallèlement les uns aux autres.

12. Couteau de rabot selon l'une quelconque des revendications 5 à 11, **caractérisé en ce que** les évidements (40, 440) pénètrent perpendiculairement à travers les tranchants d'arête (18, 418).

13. Tête d'outil pour mettre en oeuvre un procédé de rabotage selon la revendication 1, comprenant un couteau de rabot selon la revendication 5, comprenant un corps de base (16, 416) essentiellement cylindrique, qui présente au moins deux couteaux de rabot (12, 412) selon l'une quelconque des revendications 1 à 8, saillant sur la périphérie et disposés notamment dans la direction axiale, **caractérisée en ce que** les couteaux de rabot (12, 412), au moins dans la région du tranchant d'arête (18, 418), présentent une structuration fine formée par des encoches (30, 330) ayant une profondeur de 0,05 à 0,3 mm sous la forme d'une pluralité d'évidements (40, 440) en forme de rainures qui s'étendent sur au moins une région du côté arrière de l'arête (22, 422) ou une région du biseau d'arête (20, 420) du couteau de rabot (12, 412), et qui pénètrent à travers les tranchants d'arête (18, 418) des couteaux de rabot (12, 412) de telle sorte qu'une pluralité d'encoches (30, 330) soient formées au niveau des tranchants d'arête (18, 418).

14. Tête d'outil selon la revendication 13, **caractérisée en ce que** les couteaux de rabot (12) sont disposés de manière interchangeable, de préférence sous forme de plaque remplaçable ou de couteaux remplaçables, sur le corps de base (16).

15. Tête d'outil selon l'une quelconque des revendications 13 ou 14, **caractérisée en ce que** les couteaux de rabot (412) sont formés de préférence d'une seule pièce sur le corps de base (416).

16. Tête d'outil selon l'une quelconque des revendications 13 à 15, **caractérisée en ce que** le corps de base (16, 416) a un diamètre de 15 à 30 cm, de préférence de 20 à 25 cm, et le corps de base (16, 416) présente de 4 à 16, de préférence de 8 à 12 couteaux de rabot (12, 412) répartis uniformément sur sa périphérie.

17. Tête d'outil selon l'une quelconque des revendications 13 à 16, **caractérisée en ce que** des couteaux de rabot (12, 412) disposés de manière adjacente dans la direction azimutale présentent des encoches (30, 330) de différentes sections transversales, de préférence les encoches (30, 330) de couteaux de rabot adjacents sont décalées les unes par rapport aux autres dans la direction axiale.

18. Tête d'outil selon l'une quelconque des revendications 13 à 17, **caractérisée en ce que** les couteaux de rabot (12, 412) produisent, sur une surface de rabot (36) d'une pièce (34), un motif ondulé avec des coups de rabot (38) de largeur ajustable (b) et de profondeur d'onde (t) dépendant du diamètre (D) de la trajectoire circulaire (28) de la tête d'outil (10, 410), les profondeurs (s) et de préférence les largeurs des encoches (30, 330) des couteaux de rabot (12, 412) correspondant au maximum à la profondeur d'onde (t).

EP 1 927 444 B1

**Fig. 1a**

**Fig. 1b**

30.1    42.1    18.1    20.1

40.1

$\alpha_1$

12.1

22.1

$l_1$

$g_1$

## Fig. 2a

20.2    22.2    18.2    30.2

$\alpha_2$

42.2

12.2    40.2

$l_2$

$g_2$

## Fig. 2b

118    s    122    P

$\alpha$

r    143    140

112

$q$

$\gamma$

130

142

120

h

## Fig. 4

**Fig. 3a**

**Fig. 3b**

**Fig. 3c**

**Fig. 3d**

**Fig. 3e**

**Fig. 3f**

**Fig. 5a**

**Fig. 5b**

**IN DER BESCHREIBUNG AUFGEFÜHRTE DOKUMENTE**

**In der Beschreibung aufgeführte Patentdokumente**

- DE 8525705 U1
- FR 607370
- FR 2250313 A, Camard Pierre
- DE 19717706 A1
- FR 607370 A
- EP 1895088 A1